(19) Europäisches Patentamt
European Patent Office
Office européen des brevets

(11) **EP 4 722 566 A2**

(12) **EUROPÄISCHE PATENTANMELDUNG**

(43) Veröffentlichungstag:
08.04.2026   Patentblatt 2026/15

(21) Anmeldenummer: 26160114.0

(22) Anmeldetag: **11.01.2021**

(51) Internationale Patentklassifikation (IPC):
**F16H 61/04** (2006.01)

(52) Gemeinsame Patentklassifikation (CPC):
**F16H 3/089; B60K 1/00; B60K 1/02; F16H 61/04; F16H 61/688;** B60K 2001/001; B60Y 2200/14; B60Y 2200/91; F16H 2003/0811; F16H 2061/0425; F16H 2061/0433; F16H 2200/0021; F16H 2200/0034; F16H 2200/2094

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **24.01.2020   DE 102020101668**

(62) Dokumentnummer(n) der früheren Anmeldung(en) nach Art. 76 EPÜ:
**21700680.8 / 4 093 993**

(71) Anmelder:
• **MAN Truck & Bus SE
80995 München (DE)**
• **Mahle International GmbH
70376 Stuttgart (DE)**

(72) Erfinder:
• **Müller, Tobias
80995 München (DE)**

• **Zieglmaier, Wolfgang
80995 München (DE)**
• **Geissler, Josef
80995 München (DE)**
• **Wirth, Christian
85452 Moosinning (DE)**

(74) Vertreter: **v. Bezold & Partner Patentanwälte - PartG mbB
Ridlerstraße 57
80339 München (DE)**

Bemerkungen:
Diese Anmeldung ist am 23-02-2026 als Teilanmeldung zu der unter INID-Code 62 erwähnten Anmeldung eingereicht worden.

(54)   **SCHALTSTRATEGIE FÜR EIN GETRIEBE**

(57)     Die Erfindung betrifft u.a. ein Getriebe (14B) für ein Kraftfahrzeug. Das Getriebe (14B) weist ein erstes Teilgetriebe (14A1) und ein zweites Teilgetriebe (14A2) auf. Das Getriebe (14B) weist ein Ausgangselement (30) auf, das trieblich mit einem Abtrieb des ersten Teilgetriebes (14A1) und einem Abtrieb des zweiten Teilgetriebes (14A2) verbunden ist. Das Getriebe (14B) weist eine Steuereinheit (48) auf, die zum Steuern eines Gangwechsels des Getriebes (14B) ausgebildet ist, wobei für den Gangwechsel eine Schalteinheit (36) des ersten Teilgetriebes (14A1) und eine Schalteinheit (36) des zweiten Teilgetriebes (14A2) zeitversetzt, vorzugsweise sequentiell, geschaltet werden.

FIG. 4

**Beschreibung**

Die vorliegende Offenbarung betrifft unter anderem einen elektrischen Antriebsstrang mit einem Zweiganggetriebe, einen modularen Getriebebaukasten, ein Getriebe mit einer Steuereinheit zum Steuern eines Gangwechsels und ein Getriebe mit einem Nebenabtrieb.

Elektrofahrzeuge mit ausschließlich elektrischem Fahrantrieb und zugehöriger Getriebekonstruktion sind im Stand der Technik in den unterschiedlichsten Ausführungsformen bekannt.

Ein Kraftfahrzeug kann von mehreren elektrischen Antriebseinheiten angetrieben werden. Beispielsweise offenbart die DE 199 32 118 C1 eine Mehrfach-Motoren-Antrieb, bei dem zwei Elektromotoren vorgesehen sind, die einem gemeinsamen Abtrieb mit zweistufigem Getriebe zugeordnet sind. Eine automatische Steuerung steuert einerseits die Lastverteilung zwischen den Motoren und andererseits das Getriebe, um einen optimalen Wirkungsgrad des Abtriebes zu gewährleisten.

Ein mit einem Elektromotor angetriebenes Kraftfahrzeug kann ein Zweiganggetriebe aufweisen. Beispielsweise offenbart die DE 10 2013 204 227 A1 einen Antriebsstrang für ein Fahrzeug mit einem elektrischen Antrieb, der über eine Antriebswelle mit zumindest einer ersten Übersetzungsstufe und einer zweiten Übersetzungsstufe koppelbar ist. Zumindest eine Schalteinrichtung zum Schalten der Übersetzungsstufen ist vorgesehen, wobei die Schalteinrichtung zum Ausführen von Lastschaltungen zumindest ein formschlüssiges Schaltelement und zumindest ein reibschlüssiges Schaltelement umfasst. Jede der Übersetzungsstufen ist mit dem formschlüssigen Schaltelement schaltbar. Zumindest eine der Übersetzungsstufen ist sowohl mit dem formschlüssigen Schaltelement als auch mit dem reibschlüssigen Schaltelement schaltbar.

Zum Aufbauen eines Getriebes für ein Kraftfahrzeug können Modulsysteme verwendet werden. Beispielsweise offenbart die DE 10 2016 002 592 A eine 1- oder 2-Gang-Getrietriebevorrichtung für ein Elektrofahrzeug mit modularem Aufbau. Die Getriebevorrichtung weist eine Getriebekonstruktion und einen elektrischen Fahrantrieb zum Antreiben des Fahrzeugs auf. Die Getriebekonstruktion ist als Getriebemodul ausgebildet und antriebsseitig direkt mit dem Fahrantrieb verbunden.

Der Erfindung liegt die Aufgabe zu Grunde, eine alternative und/oder verbesserte Getriebetechnik für ein Elektrofahrzeug zu schaffen.

Die Aufgabe wird gelöst durch die Merkmale des Anspruchs 1. Vorteilhafte Weiterbildungen sind in den abhängigen Ansprüchen und der Beschreibung angegeben.

Gemäß einem ersten Aspekt betrifft die vorliegende Offenbarung einen Antriebsstrang für ein Kraftfahrzeug, vorzugsweise ein Nutzfahrzeug. Der Antriebsstrang weist eine elektrische Antriebseinheit, die als ein Längsmotor angeordnet ist, auf. Der Antriebsstrang weist ein Zweiganggetriebe, das trieblich mit der elektrischen Antriebseinheit, vorzugsweise direkt, verbunden ist, auf. Das Zweiganggetriebe weist eine Eingangswelle, eine Zwischenwelle und eine Ausgangswelle auf. Das Zweiganggetriebe weist eine erste Stirnradstufe, über die die Eingangswelle mit der Zwischenwelle trieblich verbindbar ist, auf. Das Zweiganggetriebe weist eine zweite Stirnradstufe, über die die Eingangswelle mit der Zwischenwelle trieblich verbindbar ist, auf. Das Zweiganggetriebe weist eine Schalteinheit, über die wahlweise ein Abtriebsrad der ersten Stirnradstufe oder ein Abtriebsrad der zweiten Stirnradstufe mit der Zwischenwelle trieblich verbindbar ist, auf. Das Zweiganggetriebe weist eine dritte Stirnradstufe, die die Zwischenwelle trieblich mit der Ausgangswelle verbindet, auf. Der Antriebsstrang weist eine Gelenkwelle, die trieblich mit der Ausgangswelle des Zweiganggetriebes, vorzugsweise direkt, verbunden ist, auf. Der Antriebsstrang weist ein Achsgetriebe (z. B. Hinterachsgetriebe), das trieblich mit der Gelenkwelle, vorzugsweise direkt, verbunden ist, auf.

Der Antriebsstrang kann den Vorteil einer geringen Komplexität aufweisen, da er lediglich drei Stirnradstufen und eine Schalteinheit aufweist. Dies kann eine hohe Modularität für das Zweiganggetriebe mit entsprechenden Skaleneffekten ermöglichen. Der gesamte Antriebsstrang kann mit geringen Entwicklungskosten und geringen Bauteil- und Produktionskosten in Serie umgesetzt werden. Die ausgewählten Komponenten des Antriebsstrangs und deren gewählte Anordnung ermöglichen, dass nur ein geringer Packagebedarf besteht, insbesondere in Bezug auf das Zweiganggetriebe.

In einem Ausführungsbeispiel ist das Zweiganggetriebe nicht-lastschaltbar ausgeführt. Damit kann eine Komplexität des Zweiganggetriebes weiter geringgehalten werden.

In einem weiteren Ausführungsbeispiel weist das Zweiganggetriebe neben der ersten, zweiten und dritten Stirnradstufe keine weitere Übersetzungsstufe zur Ausgangswelle des Zweiganggetriebes auf, und/oder das Zweiganggetriebe weist neben der Schalteinheit keine weitere Schalteinheit zur Ausgangswelle auf. Somit kann eine Komplexität des Zweiganggetriebes weiter geringgehalten werden.

In einem weiteren Ausführungsbeispiel weist die erste Stirnradstufe eine Übersetzung in einem Bereich zwischen 2,5 und 4,5 auf, die zweite Stirnradstufe weist eine Übersetzung in einem Bereich zwischen 1 und 2,5 auf, die dritte Stirnradstufe weist eine Übersetzung in einem Bereich zwischen 2,5 und 4 auf, das Zweiganggetriebe weist in einem ersten Gang eine Gesamtübersetzung in einem Bereich zwischen 2,5 und 10, vorzugsweise zwischen 3 und 7, auf, und/oder das Zweiganggetriebe weist in einem zweiten Gang eine Gesamtübersetzung in einem Bereich zwischen 6 und 18, vorzugsweise zwischen 10 und 14, auf. So wird ermöglicht, dass erst abtriebsseitig am Zweiganggetriebe hohe Momente erzeugt werden, die größere Stirnräder erfordern können. Somit kann insgesamt der Packagebedarf des Zweiganggetriebes geringgehalten werden.

In einer Ausführungsform weist die erste Stirnradstufe ein Antriebsfestrad und ein Abtriebslosrad auf. Es ist möglich, dass die zweite Stirnradstufe ein Antriebsfestrad und ein Abtriebslosrad aufweist und/oder die dritte Stirnradstufe ein Antriebsfestrad und ein Abtriebsfestrad aufweist. Dies kann eine bauraumgünstige Anordnung der Schalteinheit im Bereich der Zwischenwelle ermöglichen. Durch die Anordnung im Bereich der Zwischenwelle können Schwierigkeiten bei der Ausführung der Schalteinheit umgangen werden, die sich bei der Anordnung im Bereich der Eingangswelle, die mit sehr hohen Drehzahlen dreht, oder im Bereich der Ausgangswelle, die sehr hohe Momente überträgt, umgangen werden.

In einer weiteren Ausführungsform ist die Schalteinheit als eine formschlüssige Schalteinheit ausgeführt, vorzugsweise als eine Klauenkupplung, und/oder die Schalteinheit ist als eine reibschlüssige Schalteinheit ausgeführt.

Bevorzugt kann der Antriebsstrang und/oder das Getriebe ohne Planetengetriebe vorgesehen sein.

In einer weiteren Ausführungsform ist die elektrische Antriebseinheit ist als eine hochdrehende elektrische Antriebseinheit mit einer Grenzdrehzahl in einem Bereich zwischen 10000 U/min und 24000 U/min ausgeführt. Das verwendete Stirnrad-Zweiganggetriebe mit dessen drei Übersetzungsstufen ist für Elektroantriebe mit hoher Motorendrehzahl besonders geeignet. Hochdrehende elektrische Antriebseinheiten können eine vergleichsweise hohe Effizienz, einen hohen Leistungsfaktor und eine hohe Leistung auch bei hohen Drehzahlen liefern. Zudem können hochdrehende elektrische Antriebseinheiten aus Packagegründen vorteilhaft sein, da die Antriebseinheit kleiner ausgeführt werden kann, wenn die Leistung v.a. über eine hohe Drehzahl bereitgestellt wird. Zusätzlich weisen kleiner Antriebseinheiten einen Kostenvorteil auf, da die bspw. weniger Kupfer benötigen. Der gesparte Bauraum kann zudem zumindest teilweise zur Anordnung mindestens eines Traktionsenergiespeichers verwendet werden.

In einer weiteren Ausführungsvariante ist das Zweiganggetriebe aus einem modularen Getriebebaukasten abgeleitet, der vorzugsweise zudem eine Ableitung eines Einganggetriebes und/oder eines Summiergetriebes aus mindestens zwei Zweiganggetrieben ermöglicht. Beispielsweise können das Zweiganggetriebe, das Einganggetriebe und/oder das Summiergetriebe mindestens eine Gleichteilkomponente aufweisen (z. B. die Eingangswelle, die Zwischenwelle, die Ausgangswelle, Antriebsräder und/oder Abtriebsräder der Stirnradstufen und/oder die Schalteinheit). Der modulare Getriebebaukasten kann die Entwicklungs- und Herstellungskosten deutlich reduzieren und ermöglichen, ein modulares Antriebsstrangportfolio für eine ganze Flotte von unterschiedlichen Kraftfahrzeugen aufzubauen.

In einer weiteren Ausführungsvariante weist der Antriebsstrang und/oder das Zweiganggetriebe einen Nebenabtrieb auf. Der Antriebsstrang kann somit besonders bevorzugt für ein Nutzfahrzeug mit unterschiedlichen Nutzfahrzeugaufbauten, die mittels des Nebenabtriebs antreibbar sind, verwendet werden.

In einem Ausführungsbeispiel weist der Nebenabtrieb ein Eingangselement, vorzugsweise ein Eingangsrad (z. B. in Form eines Stirnrads), das trieblich mit einem Rad, vorzugsweise Abtriebsrad, der ersten oder zweiten Stirnradstufe des Zweiganggetrieben, vorzugsweise direkt, verbunden ist, auf. Die Anbindung an das Rad der ersten oder zweiten Stirnradstufe ermöglicht, dass der Nebenabtrieb unabhängig von einer Schaltstellung der Schalteinheit antreibbar ist, also im ersten Gang, im zweiten Gang, während des Schaltens und im Stillstand.

In einem weiteren Ausführungsbeispiel weist der Nebenabtrieb ferner ein Abtriebselement, vorzugsweise eine Ausgangswelle und optional eine Schalteinheit, über die das Eingangselement des Nebenabtriebs trieblich mit dem Abtriebselement des Nebenabtriebs verbindbar ist, auf.

In einem weiteren Ausführungsbeispiel wird das Abtriebselement des Nebenabtriebs angetrieben, wenn die Schalteinheit des Nebenabtriebs geschlossen ist. Es ist möglich, dass das Abtriebselement des Nebenabtriebs unabhängig von einer Schaltstellung der Schalteinheit des Zweiganggetriebes von der elektrischen Antriebseinheit antreibbar ist.

In einem weiteren Ausführungsbeispiel weist der Antriebsstrang ferner eine weitere elektrische Antriebseinheit auf, die als ein Längsmotor angeordnet ist. Der Antriebsstrang weist ferner ein weiteres Zweiganggetriebe auf, das trieblich mit der weiteren elektrischen Antriebseinheit verbunden ist, vorzugsweise direkt. Das weitere Zweiganggetriebe weist eine Eingangswelle, eine Zwischenwelle und die Ausgangswelle auf. Das weitere Zweiganggetriebe weist eine erste Stirnradstufe, über die die Eingangswelle mit der Zwischenwelle trieblich verbindbar ist, auf. Das weitere Zweiganggetriebe weist eine zweite Stirnradstufe, über die die Eingangswelle mit der Zwischenwelle trieblich verbindbar ist, auf. Das weitere Zweiganggetriebe weist eine Schalteinheit, über die wahlweise ein Abtriebsrad der ersten Stirnradstufe oder ein Abtriebsrad der zweiten Stirnradstufe mit der Zwischenwelle trieblich verbindbar ist, auf. Das weitere Zweiganggetriebe weist eine dritte Stirnradstufe, die sich ein Abtriebsrad mit dem Zweiganggetriebe teilt und die Zwischenwelle trieblich mit der Ausgangswelle verbindet, auf. So kann beispielsweise für schwere Nutzfahrzeuge ein elektrifizierter Antriebsstrang aufgebaut werden, der statt eines großen und teuren Elektromotors zwei kleine und kostengünstige Elektromotoren verwendet. Die Kostenvorteile können sich insbesondere aus der Stückzahlerhöhung ergeben.

Beispielsweise kann das weitere (zweite) Zweiganggetriebe wie das (erste) Zweiganggetriebe

Der erste Aspekt betrifft auch ein Kraftfahrzeug, vorzugsweise ein Nutzfahrzeug (z. B. Lastkraftwagen oder Omnibus), aufweisend einen Antriebsstrang wie hierin offenbart.

In einer Ausführungsvariante weist das Kraftfahrzeug ferner einen ersten Traktionsenergiespeicher (z. B. Traktionsbatterie), der elektrisch mit der elektrischen Antriebseinheit verbunden ist (z. B. über eine Leistungselektronik), und einen zweiten Traktionsenergiespeicher (z. B. Traktionsbatterie), der elektrisch mit der elektrischen Antriebseinheit verbunden ist (z. B. über die Leistungselektronik), auf. Der erste Traktionsenergiespeicher und der zweite Traktionsenergiespeicher können vorzugsweise auf entgegengesetzten Seiten der elektrischen Antriebseinheit, des Zweiganggetriebes und/oder der Gelenkwelle angeordnet sein, vorzugsweise an Außenlängsseiten des Kraftfahrzeugs. Diese bauraumgünstige Anordnung der Traktionsenergiespeicher kann durch die Längsausrichtung des Antriebsstrangs (der Antriebseinheit, des Getriebes und der Gelenkwelle) ermöglicht werden.

Gemäß einem zweiten Aspekt betrifft die vorliegende Offenbarung einen modularen Getriebebaukasten für ein Kraftfahrzeug, vorzugsweise ein Nutzfahrzeug. Der modulare Getriebebaukasten weist ein Grundmodul, das zum trieblichen Verbinden mit einer (z. B. einzigen) Antriebseinheit ausgebildet ist, auf. Das Grundmodul weist eine erste Übersetzungsstufe, die vorzugsweise als eine Stirnradstufe ausgeführt ist, eine zweite Übersetzungsstufe, die vorzugsweise als eine Stirnradstufe ausgeführt ist, und eine Schalteinheit zum Schalten zwischen der ersten und zweiten Übersetzungsstufe auf. Das Grundmodul wird beim Aufbauen eines ersten Getriebes einmal verbaut und das Grundmodul wird beim Aufbauen eines zweiten Getriebes mindestens zweimal verbaut.

Der Getriebebaukasten kann durch Mehrfachverwendung des Grundmoduls die Herstellungskosten durch Skaleneffekte verringern. Je nach erforderlicher Leistung des Antriebsstrangs kann eine Antriebseinheit mit dem ersten Getriebe mit nur einem Grundmodul oder mehrere Antriebseinheiten mit dem zweiten Getriebe mit mehreren Grundmodulen verwendet werden. Somit können Antriebsstränge mit unterschiedlicher Leistung aufgebaut werden, sodass ein breites Spektrum unterschiedlicher Kraftfahrzeuge den Getriebebaukasten verwenden können (z. B. Omnibusse und leichte, mittlere und schwere Lastkraftwagen). Beispielsweise kann so auch ein gesamtes Flottenportfolio für Elektro-Nutzfahrzeuge abgedeckt werden. Da vorzugsweise jedes Grundmodul immer mit derselben maximalen Leistung beaufschlagt werden kann (wegen der jeweils eigenen Antriebseinheit), ist es nicht notwendig, eine Auslegung und Dimensionierung des Grundmoduls bei mehrfacher Verwendung anzupassen. Hierdurch kann eine sehr kosteneffiziente Abdeckung eines breiten Antriebsstrang- bzw. Fahrzeugportfolios ermöglicht werden, z. B. auch in Kombination mit zwei unterschiedlichen Typen an Antriebseinheiten, die zum Antreiben der Grundmodule verwendet werden können.

In einem Ausführungsbeispiel sind die mindestens zweimal verbauten Grundmodule in dem zweiten Getriebe parallel geschaltet, zu einem Summiergetriebe zusammengeschaltet und/oder mit jeweils einer eigenen Antriebseinheit trieblich verbindbar. Das zweite Getriebe kann somit die Leistungen der Antriebseinheiten aufsummieren, wobei jedes Grundmodul einen Leistungssummanden von der jeweiligen Antriebseinheit bereitstellt.

In einem weiteren Ausführungsbeispiel sind die mindestens zweimal verbauten Grundmodule in dem zweiten Getriebe trieblich miteinander verbunden oder verbindbar, vorzugsweise abtriebsseitig, und/oder trieblich mit demselben Abtriebsrad und/oder derselben Ausgangswelle verbunden oder verbindbar.

In einem weiteren Ausführungsbeispiel ist das Grundmodul als ein Mehrganggetriebe, vorzugsweise ein Zweiganggetriebe, ausgeführt. Es ist möglich, dass das erste Getriebe als ein Mehrganggetriebe, vorzugsweise ein Zweiganggetriebe, ausgeführt ist, und/oder dass das zweite Getriebe als ein Mehrganggetriebe, vorzugsweise ein Zweiganggetriebe, ausgeführt ist.

In einer Ausführungsform weist das Grundmodul ferner eine Eingangswelle auf, die zum trieblichen Verbinden mit der Antriebseinheit ausgebildet ist und auf der ein Antriebsrad der ersten Übersetzungsstufe und ein Antriebsrad der zweiten Übersetzungsstufe angeordnet sind. Vorzugsweise kann das Grundmodul ferner mindestens ein Lager für die Eingangswelle und/oder eine Dichtung für die Eingangswelle aufweisen. So kann der Umfang des Grundmoduls vergrößert und somit dessen Vorteile besser genutzt werden.

In einer Weiterbildung sind das Antriebsrad der ersten Übersetzungsstufe und das Antriebsrad der zweiten Übersetzungsstufe drehfest auf der Eingangswelle angeordnet. Alternativ können das Antriebsrad der ersten Übersetzungsstufe und das Antriebsrad der zweiten Übersetzungsstufe auch drehbar auf der Eingangswelle angeordnet sein. Vorzugsweise kann die Schalteinheit dann auf der Eingangswelle angeordnet sein.

In einer weiteren Ausführungsform weist das Grundmodul ferner eine Zwischenwelle auf, auf der ein Abtriebsrad der ersten Übersetzungsstufe und ein Abtriebsrad der zweiten Übersetzungsstufe angeordnet sind. Vorzugsweise kann das Grundmodul ferner mindestens ein Lager für die Zwischenwelle und/oder eine Dichtung für die Zwischenwelle aufweisen. So kann der Umfang des Grundmoduls vergrößert und somit dessen Vorteile besser genutzt werden.

In einer Weiterbildung sind das Abtriebsrad der ersten Übersetzungsstufe und das Abtriebsrad der zweiten Übersetzungsstufe drehfest auf der Zwischenwelle angeordnet. Alternativ können das Abtriebsrad der ersten Übersetzungsstufe und das Abtriebsrad der zweiten Übersetzungsstufe drehbar auf der Zwischenwelle angeordnet sein. Vorzugsweise kann die Schalteinheit dann auf der Zwischenwelle angeordnet sein.

In einer Ausführungsvariante weist das Grundmodul ferner ein Antriebsrad einer dritten Übersetzungsstufe, die vorzugsweise als eine Stirnradstufe ausgeführt ist, auf, das auf der Zwischenwelle angeordnet ist, vorzugsweise drehfest. So kann der Umfang des Grundmoduls weiter vergrößert und somit dessen Vorteile besser genutzt werden.

In einer weiteren Ausführungsvariante ist ein Achsabstand zwischen der Eingangswelle und der Zwischenwelle beim ersten Getriebe und beim zweiten Getriebe gleich. Es ist möglich, dass eine räumliche Anordnung der Eingangswelle und der Zwischenwelle beim ersten Getriebe und beim zweiten Getriebe gleich oder unterschiedlich (z. B. zueinander verdreht) ist.

In einer weiteren Ausführungsvariante wird das Grundmodul beim Aufbauen eines dritten Getriebes teilweise verbaut. Vorzugsweise kann das dritte Getriebe als ein Einganggetriebe ausgeführt sein. Beispielsweise kann beim dritten Getriebe die Schalteinheit, eine von der ersten und zweiten Übersetzungsstufe und ein Losrad der anderen von der ersten und zweiten Übersetzungsstufe des Grundmoduls weggelassen werden. Bevorzugt kann beim dritten Getriebe ein Festrad von der ersten oder zweiten Übersetzungsstufe des Grundmoduls verbaut werden. So kann auch ein einfaches Einganggetriebe aus dem Grundmodul abgeleitet werden.

In einem Ausführungsbeispiel wird das Grundmodul beim Aufbauen eines weiteren Getriebes mindestens dreimal verbaut. Vorzugsweise können die mindestens dreimal verbauten Grundmodule in dem weiteren Getriebe parallel geschaltet und/oder zu einem Summiergetriebe zusammengeschaltet sind. Beispielsweise können die mindestens dreimal verbauten Grundmodule in dem weiteren Getriebe trieblich miteinander verbunden sein, vorzugsweise abtriebsseitig, und/oder mit demselben Abtriebsrad und/oder derselben Ausgangswelle trieblich miteinander verbunden sein. Es ist möglich, dass die mindestens dreimal verbauten Grundmodule in dem weiteren Getriebe mit jeweils einer eigenen Antriebseinheit trieblich verbindbar sind.

Der zweite Aspekt der vorliegenden Offenbarung betrifft auch ein Getriebe für ein Kraftfahrzeug (z. B. Nutzfahrzeug), vorzugsweise abgeleitet aus dem modularen Getriebebaukasten wie hierin offenbart. Das Getriebe weist mindestens zwei gleich aufgebaute Grundmodule auf, die jeweils mit einer eigenen Antriebseinheit trieblich verbindbar sind, wobei die mindestens zwei gleich aufgebauten Grundmodul jeweils eine erste Übersetzungsstufe, eine zweite Übersetzungsstufe und eine Schalteinheit zum Schalten zwischen der ersten und zweiten Übersetzungsstufe aufweisen.

Vorzugsweise kann Grundmodul des Getriebes wie das Grundmodul des hierin offenbarten modularen Getriebebaukastens ausgebildet sein.

Der zweite Aspekt der vorliegenden Offenbarung betrifft auch einen modularen Antriebsstrangbaukasten für ein Kraftfahrzeug, vorzugsweise Nutzfahrzeug, aufweisend den modularen Getriebebaukasten wie hierin offenbart. Vorzugsweise kann das erste Getriebe beim Aufbauen eines ersten Antriebsstrangs verbaut werden, der eine, z. B. elektrische, Antriebseinheit aufweist, die mit dem ersten Getriebe trieblich verbunden ist, vorzugsweise direkt. Bevorzugt kann das zweite Getriebe beim Aufbauen eines zweiten Antriebsstrangs verbaut werden, der mindestens zwei, z. B. elektrische, Antriebseinheiten aufweist, die jeweils mit einem der mindestens zwei Grundmodule des zweiten Getriebes trieblich verbunden sind, vorzugsweise direkt.

Der zweite Aspekt der vorliegenden Offenbarung betrifft auch ein Kraftfahrzeug, vorzugsweise ein Nutzfahrzeug (z. B. Lastkraftwagen oder Omnibus), aufweisend ein Getriebe, das als das erste Getriebe oder als das zweite Getriebe aus dem modularen Getriebebaukasten wie hierin offenbart abgeleitet ist. Alternativ kann das Getriebe wie hierin offenbart umfasst sein. Alternativ kann das Kraftfahrzeug einen Antriebsstrang aufweisen, der als der erste Antriebsstrang oder als der zweite Antriebsstrang aus dem modularen Antriebsstrangbaukasten wie hierin offenbart abgeleitet ist.

Gemäß einem dritten Aspekt betrifft die vorliegende Offenbarung ein Getriebe, vorzugsweise ein Zweiganggetriebe, für ein Kraftfahrzeug, vorzugsweise ein Nutzfahrzeug. Das Getriebe weist ein erstes Teilgetriebe, das zum trieblichen Verbinden mit einer ersten Antriebseinheit ausgebildet ist, auf. Das erste Teilgetriebe weist zwei Übersetzungsstufen und eine (z. B. formschlüssige) Schalteinheit zum Schalten zwischen den zwei Übersetzungsstufen auf. Das Getriebe weist ein zweites Teilgetriebe, das zum trieblichen Verbinden mit einer zweiten Antriebseinheit ausgebildet ist, auf. Das zweite Teilgetriebe weist zwei Übersetzungsstufen und eine (z. B. formschlüssige) Schalteinheit zum Schalten zwischen den zwei Übersetzungsstufen auf. Das Getriebe weist ein Ausgangselement (z. B. eine Ausgangswelle) auf, das trieblich mit einem Abtrieb des ersten Teilgetriebes und einem Abtrieb des zweiten Teilgetriebes verbunden ist. Das Getriebe weist eine Steuereinheit auf, die zum Steuern eines Gangwechsels des Getriebes (z. B. vom ersten Gang des Getriebes zum zweiten Gang des Getriebes oder umgekehrt) ausgebildet ist, wobei für den Gangwechsel die Schalteinheit des ersten Teilgetriebes und die Schalteinheit des zweiten Teilgetriebes zeitversetzt, vorzugsweise sequentiell, geschaltet werden.

Durch den zeitversetzten Schaltablauf für einen einzigen Gangwechsel kann das Getriebe eine Schaltung ohne Zugkraftunterbrechung ermöglichen. Bei einer Schaltung einer Schalteinheit eines Teilgetriebes kann über dieses Teilgetriebe keine Antriebsleistung mehr übertragen werden. In dieser Zeit kann das andere Teilgetriebe jedoch weiterhin Antriebsleistung übertragen, da die Schalteinheiten nicht gleichzeitig schalten. Je nach Steuerung der mit den Teilgetrieben verbundenen Antriebseinheiten kann eine Zugkraftreduzierung während des Schalten teilweise oder vollständig kompensiert werden, wenn die mit dem jeweils nicht schaltenden Teilgetriebe verbundene Antriebseinheit während des Schaltens der Schalteinheit des anderen Teilgetriebes mit einer erhöhten Leistungsausgabe betrieben wird.

Vorzugsweise kann sich der Begriff "Steuereinheit" auf eine Elektronik (z. B. mit Mikroprozessor(en) und Datenspeicher) und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Zweckmäßig kann die Steuereinheit dazu ausgebildet sein, die erste Schalteinheit und die zweite Schalteinheit zu steuern und/oder zu betätigen.

In einem Ausführungsbeispiel ist die Steuereinheit dazu ausgebildet, dass zunächst die Schalteinheit des ersten Teilgetriebes schaltet und dann die Schalteinheit des zweiten Teilgetriebes schaltet, vorzugsweise nach Abschluss des Schaltens der Schalteinheit des ersten Teilgetriebes und/oder Verstreichen einer Zeitdauer bis die Schalteinheit des zweiten Teilgetriebes annähernd lastfrei ist. Damit kann sichergestellt werden, dass der Gangwechsel ohne Zugkraftunterbrechung stattfinden kann.

In einem weiteren Ausführungsbeispiel ist die Steuereinheit dazu ausgebildet, dass das erste Teilgetriebe und das zweite Teilgetriebe während des Gangwechsels nacheinander eine Antriebsleistung durch das Getriebe übertragen, wobei vorzugsweise jeweils die Schalteinheit eines der Teilgetriebe schaltet und das jeweils andere der Teilgetriebe die Antriebsleistung überträgt.

In einem weiteren Ausführungsbeispiel weisen die zwei Übersetzungsstufe des ersten Teilgetriebes die gleichen Übersetzungen auf wie die zwei Übersetzungsstufen des zweiten Teilgetriebes. Es ist möglich, dass die zwei Übersetzungsstufen des ersten Teilgetriebes und die zwei Übersetzungsstufen des zweiten Teilgetriebes als Gleichteilkomponenten ausgebildet sind.

In einer Ausführungsform weisen das erste Teilgetriebe und das zweite Teilgetriebe gleich viele Gänge auf. Beispielsweise kann das erste Teilgetriebe und/oder das zweite Teilgetriebe jeweils als Zweiganggetriebe ausgeführt sein. Es ist möglich, dass das erste Teilgetriebe und das zweite Teilgetriebe im Wesentlichen gleich aufgebaut sind. Beispielsweise können beide Teilgetriebe ein Grundmodul wie hierin offenbart aufweisen.

In einer weiteren Ausführungsform sind die Schalteinheit des ersten Teilgetriebes und die Schalteinheit des zweiten Teilgetriebes unabhängig voneinander schaltbar. Damit kann die zeitverzögerte Schaltung auf einfach Weise ermöglicht werden.

In einer weiteren Ausführungsform ist das Getriebe als ein Summiergetriebe aus dem ersten Teilgetriebe und dem zweiten Teilgetriebe gebildet. Es ist möglich, dass das erste Teilgetriebe und das zweite Teilgetriebe parallel geschaltet sind.

In einer Ausführungsvariante ist das Getriebe lastschaltbar, und/oder das erste Teilgetriebe und das zweite Teilgetriebe sind jeweils nicht-lastschaltbar. Die Lastschaltbarkeit des Getriebes kann fahrsituationsabhängig sein. Eine Lastschaltbarkeit kann z. B. möglich sein, wenn die Nennleistung (oder eine temporär erlaubte Überschreitung der Nennleistung) einer der beiden Antriebseinheiten größer als die erforderliche Leistung ist.

In einer weiteren Ausführungsvariante ist die Schalteinheit des ersten Teilgetriebes und/oder die Schalteinheit des zweiten Teilgetriebes zum nur im Wesentlichen lastfreien Schalten ausgeführt. Beispielsweise kann die Schalteinheit des ersten Teilgetriebes und/oder die Schalteinheit des zweiten Teilgetriebes als eine formschlüssige Schalteinheit ausgebildet sein, vorzugsweise als Klauenkupplung.

In einer weiteren Ausführungsvariante sind die zwei Übersetzungsstufen des ersten Teilgetriebes und/oder die zwei Übersetzungsstufen des zweiten Teilgetriebes als Radstufen, vorzugsweise Stirnradstufen, ausgebildet.

In einem Ausführungsbeispiel weisen das erste Teilgetriebe und das zweite Teilgetriebe jeweils eine Eingangswelle, eine Zwischenwelle und die zwei Übersetzungsstufen, über die die Eingangswelle jeweils trieblich mit der Zwischenwelle verbindbar ist, auf. Über die Schalteinheit ist wahlweise die eine oder die andere der zwei Übersetzungsstufen trieblich mit der Eingangswelle oder der Zwischenwelle verbindbar. Das erste Teilgetriebe und das zweite Teilgetriebe können vorzugsweise ferner jeweils eine dritte Übersetzungsstufe, über die die Zwischenwelle trieblich mit dem Ausgangselement verbunden ist, aufweisen.

Der dritte Aspekt der vorliegenden Offenbarung betrifft auch einen Antriebsstrang für ein Kraftfahrzeug, vorzugsweise ein Nutzfahrzeug, aufweisend eine erste, vorzugsweise elektrische, Antriebseinheit und eine zweite, vorzugsweise elektrische, Antriebseinheit. Der Antriebsstrang weist ferner ein Getriebe wie hierin offenbart auf, wobei die erste Antriebseinheit trieblich (z. B. nur) mit dem ersten Teilgetriebe verbunden ist (z. B. direkt) und die zweite Antriebseinheit trieblich (z. B. nur) mit dem zweiten Teilgetriebe verbunden ist (z. B. direkt).

In einem weiteren Ausführungsbeispiel ist die Steuereinheit dazu ausgebildet, dass während des Schaltens der Schalteinheit einer der Teilgetriebe eine Antriebsleistungsverringerung der Antriebseinheit, die mit dem Teilgetriebe, dessen Schalteinheit gerade schaltet, verbunden ist, durch eine Antriebsleistungserhöhung derjenigen Antriebseinheit, die trieblich mit dem Teilgetriebe, dessen Schalteinheit gerade nicht schaltet, verbunden ist, zumindest teilweise kompensiert wird, vorzugsweise für beide Antriebseinheiten nacheinander.

In einem weiteren Ausführungsbeispiel ist die Steuereinheit dazu ausgebildet, dass vor dem Schalten der Schalteinheiten der Teilgetriebe eine Antriebsleistungsverringerung derjenigen Antriebseinheit, die mit dem Teilgetriebe, dessen Schalteinheit zuerst schaltet, vorgenommen wird und/oder eine, vorzugsweise synchrone und/oder gleichzeitige, Antriebsleistungserhöhung derjenigen Antriebseinheit, die mit dem Teilgetriebe, dessen Schalteinheit zeitverzögert schaltet, vorgenommen wird.

In einem weiteren Ausführungsbeispiel ist die Steuereinheit dazu ausgebildet, dass zwischen dem Schalten der Schalteinheiten der Teilgetriebe eine Antriebsleistungsverringerung derjenigen Antriebseinheit, die mit dem Teilgetriebe, dessen Schalteinheit zeitverzögert schaltet, vorgenommen wird und/oder eine, vorzugsweise synchrone und/oder gleichzeitige, Antriebsleistungserhöhung derjenigen Antriebseinheit, die mit dem Teilgetriebe, dessen Schalteinheit gerade geschaltet hat, vorgenommen wird.

In einem weiteren Ausführungsbeispiel ist die Steuereinheit dazu ausgebildet, dass nach dem Schalten der Schalteinheiten der Teilgetriebe eine Antriebsleistungsverringerung derjenigen Antriebseinheit, die mit dem Teilgetriebe, dessen Schalteinheit zuerst geschaltet hat, vorgenommen wird und/oder eine, vorzugsweise synchrone und/oder gleichzeitige, Antriebsleistungserhöhung derjenigen Antriebseinheit, die mit dem Teilgetriebe, dessen Schalteinheit zeitverzögert geschaltet hat, vorgenommen wird.

In einer Ausführungsform wird eine Antriebsleistungserhöhung während des Gangwechsels temporär maximal auf über eine Nennleistung der jeweiligen Antriebseinheit gesteigert oder ist dahin steigerbar (z. B. bis auf eine jeweils verfügbare Spitzenleistung oberhalb der maximalen Dauerleistung). Alternativ kann beispielsweise eine Antriebsleistungserhöhung während des Gangwechsels temporär maximal nur bis zu einer Nennleistung der jeweiligen Antriebseinheit gesteigert werden oder steigerbar sein.

Der dritte Aspekt der vorliegenden Offenbarung betrifft auch ein Kraftfahrzeug, vorzugsweise ein Nutzfahrzeug (z. B. Lastkraftwagen oder Omnibus), aufweisend das Getriebe wie hierin offenbart oder den Antriebsstrang wie hierin offenbart.

Gemäß einem vierten Aspekt betrifft die vorliegende Offenbarung ein Getriebe für ein Kraftfahrzeug, vorzugsweise ein Nutzfahrzeug. Das Getriebe weist ein erstes Teilgetriebe, das zum trieblichen Verbinden mit einer ersten Antriebseinheit ausgebildet ist, und ein zweites Teilgetriebe, das zum trieblichen Verbinden mit einer zweiten Antriebseinheit ausgebildet ist und einen Nebenabtrieb aufweist, auf. Das Getriebe weist ein Ausgangselement, vorzugsweise eine Ausgangswelle, zum Antreiben des Kraftfahrzeugs auf. Das Ausgangselement ist trieblich mit einem Hauptabtrieb (z. B. Abtriebsrad, Stirnrad) des ersten Teilgetriebes und einem Hauptabtrieb (z. B. Abtriebsrad, Stirnrad) des zweiten Teilgetriebes verbunden.

Das Getriebe kann ermöglichen, dass die Leistungen der beiden Antriebseinheiten zum Antreiben des Kraftfahrzeugs im Getriebe kombiniert werden können. Zusätzlich kann das Getriebe ermöglichen, dass die erste Antriebseinheit das Kraftfahrzeug über das erste Teilgetriebe antreibt und die zweie Antriebseinheit den Nebenabtrieb z. B. während der Fahrt oder im Stillstand des Kraftfahrzeugs drehzahl- und drehmomentunabhängig von der ersten Antriebseinheit antreibt. Der Nebenabtrieb kann beispielsweise auch während der Fahrt zugeschaltet werden. Der Nebenabtrieb kann bspw. auch unabhängig von einer Fahrzeuggeschwindigkeit angetrieben werden. Es kann auch möglich sein, dass beide Antriebseinheiten das Kraftfahrzeug antreiben und beide Antriebseinheiten oder nur die zweite Antriebseinheit zusätzlich den Nebenabtrieb antreibt.

Es ist möglich, dass das erste Teilgetriebe und das zweite Teilgetriebe jeweils ein Grundmodul wie hierin offenbart aufweisen.

In einem Ausführungsbeispiel ist das Getriebe als ein Summiergetriebe aus dem ersten Teilgetriebe und dem zweiten Teilgetriebe gebildet. Das erste Teilgetriebe und das zweite Teilgetriebe können parallel geschaltet und/oder im Wesentlichen gleich aufgebaut sein.

In einem weiteren Ausführungsbeispiel ist das Getriebe als ein (z. B. lastschaltbares) Mehrganggetriebe, vorzugsweise Zweiganggetriebe, ausgeführt. Es ist möglich, dass das erste Teilgetriebe und/oder das zweite Teilgetriebe als ein (z. B. nicht-lastschaltbares) Mehrganggetriebe, vorzugsweise Zweiganggetriebe, ausgeführt ist.

Beispielsweise kann eine Steuereinheit umfasst sein, die zum Schalten des Getriebes, insbesondere von Schalteinheiten des Getriebes, ausgebildet ist.

In einem weiteren Ausführungsbeispiel ist das Getriebe (z. B. von der Steuereinheit) derart schaltbar, dass das Ausgangselement über das erste Teilgetriebe und das zweite Teilgetriebe antreibbar ist und gleichzeitig der Nebenabtrieb nicht antreibbar ist. Damit kann die gesamte Leistung der Antriebseinheiten zum Antreiben des Kraftfahrzeugs genutzt werden.

In einer Ausführungsvariante ist das Getriebe (z. B. von der Steuereinheit) derart schaltbar, dass das Ausgangselement nur über das erste Teilgetriebe antreibbar ist und gleichzeitig der Nebenabtrieb nur über das zweite Teilgetriebe antreibbar ist. So kann die erste Antriebseinheit das Kraftfahrzeug antreiben und die zweite Antriebseinheit den Nebenabtrieb antreiben, und zwar unabhängig von einer Drehzahl und einem Drehmoment der ersten Antriebseinheit und unabhängig von einer Fahrzeuggeschwindigkeit.

In einer weiteren Ausführungsvariante ist das Getriebe (z. B. von der Steuereinheit) derart schaltbar, dass das Ausgangselement über das erste Teilgetriebe und das zweite Teilgetriebe antreibbar ist und gleichzeitig der Nebenabtrieb nur über das zweite Teilgetriebe antreibbar ist. So können beide Antriebseinheiten das Kraftfahrzeug antreiben und die zweite Antriebseinheit den Nebenabtrieb antreiben. Beim Schalten kann zudem eine Zugkraftverringerung verhindert werden.

In einer weiteren Ausführungsvariante ist das Getriebe (z. B. von der Steuereinheit) derart schaltbar, dass das Ausgangselement nicht antreibbar ist und gleichzeitig der Nebenabtrieb über das zweite Teilgetriebe antreibbar ist. So kann beispielsweise im Stillstand des Kraftfahrzeugs der Nebenabtrieb von der zweiten Antriebseinheit angetrieben werden.

In einer weiteren Ausführungsvariante ist das Getriebe (z. B. von der Steuereinheit) derart schaltbar, dass das Ausgangselement nicht antreibbar ist und gleichzeitig der Nebenabtrieb über das erste Teilgetriebe und das zweite Teilgetriebe antreibbar ist. So kann beispielsweise bei besonders leistungsintensiven Anwendungen im Stillstand des Kraftfahrzeugs der Nebenabtrieb von beiden Antriebseinheiten angetrieben werden. Das Ausgangselement kann hierzu bspw. mittels einer Kupplung von dem Getriebe (z. B. von einer dritten Übersetzungsstufe des Getriebes) entkoppelt werden, sodass die gesamte Antriebsleistung für den Nebenabtrieb zur Verfügung steht. Es ist auch möglich, ein verschiebbares Koppelelement zu verwenden, das beide Teilgetriebe miteinander kuppeln kann.

In einer weiteren Ausführungsvariante ist das Getriebe (z. B. von der Steuereinheit) derart schaltbar, dass das Ausgangselement antreibbar ist und gleichzeitig der Nebenabtrieb über das erste Teilgetriebe und das zweite Teilgetriebe antreibbar ist. Es ist auch möglich, dass das Ausgangselement zwar angetrieben wird, aber eine triebliche Verbindung zwischen dem Ausgangselement und den Rädern des Kraftfahrzeugs getrennt bzw. entkoppelt wird, sodass im Stillstand des Kraftfahrzeugs die gesamte Antriebsleistung beider Antriebseinheiten für den Antrieb des Nebenabtriebs zur Verfügung steht.

In einem Ausführungsbeispiel weist der Nebenabtrieb ein Eingangselement auf, das vorzugsweise als ein Eingangsrad ausgeführt ist und/oder vorzugsweise immer trieblich mit einer Eingangswelle des zweiten Teilgetriebes verbunden ist. Vorzugsweise kann der Nebenabtrieb ferner ein Abtriebselement, vorzugsweise eine Abtriebswelle, und eine Schalteinheit, über die das Eingangselement des Nebenabtriebs trieblich mit dem Abtriebselement des Nebenabtriebs verbindbar ist, aufweisen.

In einem weiteren Ausführungsbeispiel weist das zweite Teilgetriebe zwei Übersetzungsstufen, vorzugsweise Stirnradstufen, und eine Schalteinheit zum Schalten zwischen den zwei Übersetzungsstufen auf.

In einer Weiterbildung ist der Nebenabtrieb trieblich mit einer der zwei Übersetzungsstufen verbunden, vorzugsweise mit einem Abtriebsrad einer der zwei Übersetzungsstufen. Vorzugsweise kann der Nebenabtrieb unabhängig von einer Schaltstellung der Schalteinheit des zweiten Teilgetriebes mit der einen der zwei Übersetzungsstufen des zweiten Teilgetriebes trieblich verbunden sein. Dies kann ermöglichen, den Nebenabtrieb unabhängig von einer Schaltstellung der Schalteinheit des zweien Teilgetriebes anzutreiben.

In einer Weiterbildung ist die Schalteinheit des zweiten Teilgetriebes derart schaltbar, dass das Ausgangselement über eine erste der zwei Übersetzungsstufen antreibbar ist und/oder das Ausgangselement über eine zweite der zwei Übersetzungsstufen antreibbar ist und/oder das Ausgangselement über keine der zwei Übersetzungsstufen antreibbar ist (Neutralstellung).

In einer Ausführungsform weist das erste Teilgetriebe zwei Übersetzungsstufen, vorzugsweise Stirnradstufen, und eine Schalteinheit zum Schalten zwischen den zwei Übersetzungsstufen auf.

In einer Weiterbildung ist das Ausgangselement über das erste Teilgetriebe und das zweite Teilgetriebe antreibbar und gleichzeitig der Nebenabtrieb nicht antreibbar ist, wenn:

- die Schalteinheit des ersten Teilgetriebes eine der zwei Übersetzungsstufen des ersten Teilgetriebes trieblich mit dem Ausgangselement verbindet; und/oder
- die Schalteinheit des zweiten Teilgetriebes eine der zwei Übersetzungsstufen des zweiten Teilgetriebes trieblich mit dem Ausgangselement verbindet; und/oder
- die Schalteinheit des Nebenabtriebs das Eingangselement des Nebenabtriebs trieblich von dem Abtriebselement trennt.

In einer weiteren Ausführungsform ist das Ausgangselement nur über das erste Teilgetriebe antreibbar und gleichzeitig der Nebenabtrieb über das zweite Teilgetriebe antreibbar, wenn:

- die Schalteinheit des ersten Teilgetriebes eine der zwei Übersetzungsstufen des ersten Teilgetriebes trieblich mit dem Ausgangselement verbindet; und/oder
- die Schalteinheit des zweiten Teilgetriebes keine der zwei Übersetzungsstufen des zweiten Teilgetriebes trieblich mit dem Ausgangselement verbindet; und/oder
- die Schalteinheit des Nebenabtriebs das Eingangselement des Nebenabtriebs trieblich mit dem Abtriebselement verbindet.

In einer weiteren Ausführungsform ist das Ausgangselement über das erste Teilgetriebe und das zweite Teilgetriebe antreibbar und gleichzeitig der Nebenabtrieb nur über das zweite Teilgetriebe antreibbar, wenn:

- die Schalteinheit des ersten Teilgetriebes eine der zwei Übersetzungsstufen des ersten Teilgetriebes trieblich mit dem Ausgangselement verbindet; und/oder
- die Schalteinheit des zweiten Teilgetriebes eine der zwei Übersetzungsstufen des zweiten Teilgetriebes trieblich mit dem Ausgangselement verbindet; und/oder

- die Schalteinheit des Nebenabtriebs das Eingangselement des Nebenabtriebs trieblich mit dem Abtriebselement verbindet.

In einer Ausführungsvariante ist das erste Teilgetriebe über ein bewegbares, vorzugsweise verschiebbares, Koppelelement, vorzugsweise Rad (z. B. Stirnrad), trieblich mit dem Nebenabtrieb verbindbar. Vorzugsweise kann das Koppelelement mit einem Eingangselement des Nebenabtriebs trieblich verbindbar sein, und/oder das Koppelelement kann unabhängig von einer Schaltstellung der Schalteinheit des ersten Teilgetriebes eine der zwei Übersetzungsstufen des ersten Teilgetriebes mit dem Nebenabtrieb trieblich verbinden.

Beispielsweise kann das Koppelelement in Eingriff mit dem Eingangselement und/oder mit einem Rad einer Übersetzungsstufe des ersten Teilgetriebes bewegt, vorzugweise verschoben, werden, und außer Eingriff von dem Eingangselement und/oder von dem Rad der Übersetzungsstufe des ersten Teilgetriebes bewegt, vorzugweise verschoben, werden.

Beispielsweise kann das Koppelelement auch als eine Kupplung, z. B. eine Klauenkupplung, ausgeführt sein.

Der vierte Aspekt der vorliegenden Offenbarung betrifft auch ein Kraftfahrzeug, vorzugsweise ein Nutzfahrzeug (z. B. Lastkraftwagen oder Omnibus), oder einen Antriebsstrang für ein Kraftfahrzeug, vorzugsweise ein Nutzfahrzeug, aufweisend eine erste, vorzugsweise elektrische, Antriebseinheit, eine zweite, vorzugsweise elektrische, Antriebseinheit, und ein Getriebe wie hierin offenbart. Die erste Antriebseinheit ist trieblich mit dem ersten Teilgetriebe verbunden (z. B. direkt), und die zweite Antriebseinheit ist trieblich mit dem zweiten Teilgetriebe verbunden (z. B. direkt).

Es ist möglich, dass beide Antriebseinheiten gleich ausgebildet sind.

In einer Weiterbildung wird zum Zuschalten des Nebenabtriebs die Drehzahl der zweiten Antriebseinheit so weit reduziert (z. B. mittels einer Steuereinheit), dass die Schalteinheit des Nebenabtriebs koppelbar ist. Hierzu kann das entsprechende Teilgetriebe vom Abtrieb abgekoppelt werden. Hierzu kann die Schalteinheit des entsprechenden Teilgetriebes auf neutral gestellt werden. Es ist möglich, dass der Nebenabtrieb während der Fahrt und/oder im Stillstand des Kraftfahrzeugs zuschaltbar ist.

In einem weiteren Ausführungsbeispiel ist der Nebenabtrieb mittels der zweiten Antriebseinheit drehzahlunabhängig und drehmomentunabhängig von der ersten Antriebseinheit antreibbar. Es ist möglich, dass der Nebenabtrieb mittels der zweiten Antriebseinheit unabhängig von einer durch die erste Antriebseinheit bewirkten Fahrgeschwindigkeit des Kraftfahrzeugs antreibbar ist. Es ist auch möglich, dass das Kraftfahrzeug mittels der ersten Antriebseinheit antreibbar ist und der Nebenabtrieb mittels der zweiten Antriebseinheit antreibbar ist.

Es ist möglich, dass zum Schalten der Schalteinheit(en) und/oder zum Betreiben der Antriebseinheit(en) eine Steuereinheit umfasst ist.

Vorzugsweise kann der hierin verwendete Ausdruck "trieblich verbunden" bedeuten, dass die beiden "trieblich verbunden" Komponenten direkt oder indirekt trieblich miteinander verbunden sind.

Die zuvor beschriebenen einzelnen Merkmale, bevorzugten Weiterbildung und Varianten der obigen Aspekte sind beliebig miteinander kombinierbar, auch zwischen den einzelnen Aspekten. Weitere Einzelheiten und Vorteile der Erfindung werden im Folgenden unter Bezug auf die beigefügten Zeichnungen beschrieben. Es zeigen:

Figur 1     eine schematische Ansicht eines beispielhaften Antriebsstrangs eines Kraftfahrzeugs;

Figur 2     eine schematische Ansicht eines beispielhaften Getriebes, das mit einer Antriebseinheit verbunden ist;

Figur 3     eine schematische Ansicht eines beispielhaften Grundmoduls eines modularen Getriebebaukastens;

Figur 4     eine schematische Ansicht eines weiteren beispielhaften Getriebes, das mit zwei Antriebseinheiten verbunden ist;

Figur 5     eine schematische Ansicht eines weiteren anderen beispielhaften Getriebes, das mit einer Antriebseinheit verbunden ist;

Figur 6     eine schematische Darstellung eines beispielhaften Modulbaukastens;

Figur 7     ein Diagramm, das beispielhafte Volllastkennlinien für elektrische Antriebseinheiten zeigt;

Figur 8     ein beispielhaftes Schaltdiagramm für ein beispielhaftes Getriebe und unter Teillast betriebenen elektrischen Antriebseinheiten;

Figur 9     ein weiteres beispielhaftes Schaltdiagramm für ein beispielhaftes Getriebe und unter Volllast betriebenen elektrischen Antriebseinheiten;

Figur 10    eine schematische Ansicht eines weiteren beispielhaften Antriebsstrangs eines Kraftfahrzeugs;

Figur 11    eine schematische Darstellung von Ausgangswellen des beispielhaften Antriebsstrangs von Figur 9 in einer Vertikalebene;

Figur 12 eine schematische Ansicht eines weiteren anderen beispielhaften Getriebes, das mit zwei Antriebseinheiten verbunden ist, in einer ersten Schaltstellung;

Figur 13 eine schematische Ansicht des weiteren anderen beispielhaften Getriebes von Figur 12 in einer zweiten Schaltstellung;

Figur 14 eine schematische Ansicht des weiteren anderen beispielhaften Getriebes von Figur 12 in einer dritten Schaltstellung;

Figur 15 eine schematische Ansicht des weiteren anderen beispielhaften Getriebes von Figur 12 in einer vierten Schaltstellung; und

Figur 16 eine schematische Ansicht eines weiteren anderen beispielhaften Getriebes, das mit zwei Antriebseinheiten verbunden ist.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

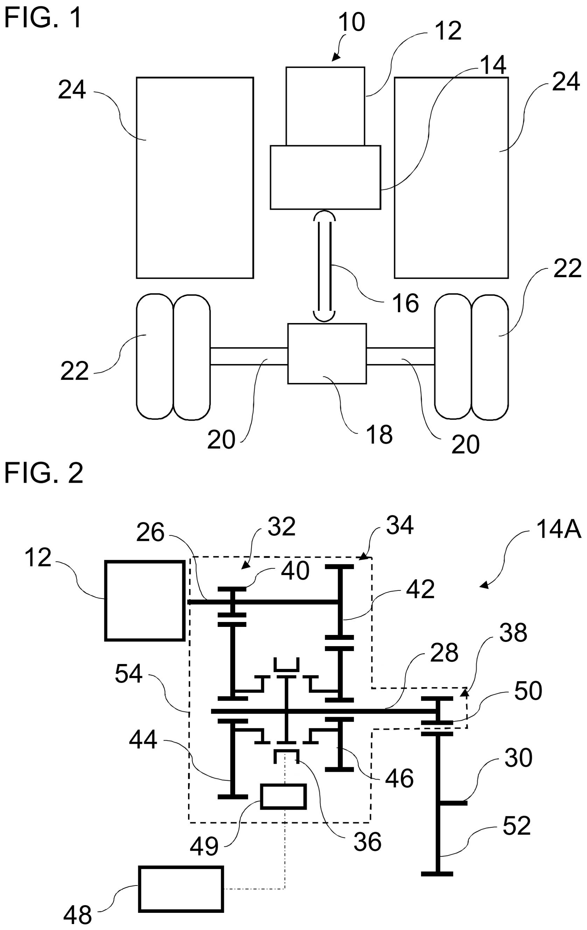

Figur 1 zeigt rein schematisch einen Antriebsstrang 10 eines Kraftfahrzeugs. Zweckmäßig kann das Kraftfahrzeug als ein Nutzfahrzeug, insbesondere als ein Lastkraftwagen oder ein Omnibus, ausgeführt sein.

Der Antriebsstrang 10 weist eine Antriebseinheit 12, ein Getriebe 14, eine Gelenkwelle 16, ein Achsgetriebe 18, Radwellen 20 und Räder 22 auf.

Die Antriebseinheit 12 ist besonders bevorzugt als eine elektrische Antriebseinheit ausgeführt. Die Antriebseinheit 12 ist zweckmäßig als eine hochdrehende elektrische Antriebseinheit ausgeführt. Beispielsweise kann die elektrische Antriebseinheit 12 eine Grenzdrehzahl in einem Bereich zwischen 10000 U/min und 24000 U/min (oder mehr oder weniger) aufweisen. Die untere Grenze kann bspw. bei 2500 U/min liegen. Die Antriebseinheit 12 ist als ein Längsmotor angeordnet, das heißt längs der Fahrzeuglängsachse ausgerichtet bzw. mit einer Ausgangswelle im Wesentlichen parallel zur Fahrzeuglängsachse. Es ist möglich, dass mehr als eine Antriebseinheit 12 vorgesehen ist.

Das Getriebe 14 ist trieblich mit einer Ausgabewelle der Antriebseinheit 12 verbunden, vorzugsweise direkt. Ein Gehäuse des Getriebes 14 kann beispielsweise direkt an ein Gehäuse der Antriebseinheit 12 angeflanscht sein. Das Getriebe 14 kann beispielsweise in einem ersten Gang eine Übersetzung (i) in einem Bereich zwischen 2,5 und 10, vorzugsweise zwischen 3 und 7, aufweisen. In einem zweiten Gang kann eine Übersetzung zwischen 6 und 18, vorzugsweise zwischen 10 und 14, sein.

Die Gelenkwelle 16 verbindet eine Ausgangswelle des Getriebes 14 trieblich mit dem Achsgetriebe 18. Die Gelenkwelle 16 ist dazu ausgebildet, nichtfluchtende Drehachsen der Ausgangswelle des Getriebes 14 und eines Eingangselements des Achsgetriebes 18 miteinander zu verbinden. Beispielsweise kann die Gelenkwelle als eine Kardanwelle mit zwei Kreuzgelenken ausgeführt sein.

Das Achsgetriebe 18 verbindet die Gelenkwelle 16 trieblich mit den Radwellen 20. Das Achsgetriebe 18 kann beispielsweise eine Kegelradstufe und ein Differentialgetriebe aufweisen. Es ist auch möglich, dass das Achsgetriebe einen Durchtrieb zu einer weiteren angetriebenen Achse aufweist. Die Radwellen 20 treiben die Räder 22 an.

Das Kraftfahrzeug weist einen oder mehrere Traktionsenergiespeicher 24 auf. Die Traktionsenergiespeicher 24 können elektrische Energie zum Antreiben der elektrischen Antriebseinheit(en) 12 bereitstellen. Beispielsweise können die Traktionsenergiespeicher 24 über eine Leistungselektronik (nicht dargestellt) elektrisch mit der elektrischen Antriebseinheit 12 verbunden sein. Die in Figur 1 gezeigte, bauraumgünstige Anordnung weist zwei Traktionsenergiespeicher 24 auf, die auf entgegengesetzten Längsseiten des Antriebsstrangs 10 angeordnet sind.

Die Figur 2 zeigt ein Ausführungsbeispiel für das Getriebe 14 von Figur 1, das zum Abgrenzen von anderen Ausführungsbeispielen mit dem Bezugszeichen 14A versehen ist.

Das Getriebe 14A ist als ein beispielsweise nicht-lastschaltbares Zweiganggetriebe ausgeführt. Das Getriebe 14A weist eine Eingangswelle 26, eine Zwischenwelle 28 und eine Ausgangswelle 30 auf. Das Getriebe 14A weist zudem eine erste Übersetzungsstufe 32, eine zweite Übersetzungsstufe 34, eine Schalteinheit 36 und eine dritte Übersetzungsstufe 38 auf.

Die Eingangswelle 26 ist trieblich mit der Antriebseinheit 12 verbunden. Vorzugsweise ist die Eingangswelle 26 direkt trieblich mit einer Ausgangswelle der Antriebseinheit 12 verbunden.

Die erste Übersetzungsstufe 32 und die zweite Übersetzungsstufe 34 können die Eingangswelle 26 trieblich mit der Zwischenwelle 28 verbinden. Die Übersetzungsstufen 32 und 34 weisen jeweils ein beispielhaft als Festrad ausgeführtes Antriebsrad 40, 42 und ein beispielhaft als Losrad ausgeführtes Abtriebsrad 44, 46 auf. Das Antriebsrad 40 bzw. 42 kämmt mit dem Abtriebsrad 44 bzw. 46. Die Antriebsräder 40, 42 sind nebeneinander auf der Eingangswelle 26 angeordnet. Die als Feststräder ausgeführten Antriebsräder 40, 42 sind drehfest auf der Eingangswelle 26 angeordnet. Die Abtriebsräder 44, 46 sind nebeneinander auf der Zwischenwelle 28 angeordnet. Die als Losräder ausgeführten Abtriebsräder 44, 46 sind drehbar auf der Zwischenwelle 28 gelagert. Die Übersetzungsstufen 32 und 34 sind bevorzugt als Stirnradstufen mit jeweils zwei Stirn(-zahn-)rädern ausgeführt.

Die Schalteinheit 36 kann die Abtriebsräder 44, 46 drehfest und damit trieblich mit der Zwischenwelle 28 verbinden. In einer ersten Schaltstellung (erster Gang) verbindet die Schalteinheit 36 das Abtriebsrad 44 trieblich mit der Zwischenwelle 28. In einer zweiten Schaltstellung (zweiter Gang) verbindet die Schalteinheit 36 das Abtriebsrad 46 trieblich mit der Zwischenwelle 28. In einer dritten Schaltstellung (Neutralstellung), wie dargestellt in Figur 2, verbindet die Schalteinheit 36 keines der Abtriebsräder 44, 46 trieblich mit der Zwischenwelle 28. Vorzugsweise kann die Schalteinheit 36 als formschlüssige Schalteinheit ausgeführt sein, insbesondere als eine reine Klauenkupplung. Es ist allerdings auch möglich, dass die Schalteinheit 36 beispielsweise als eine reibschlüssige Schalteinheit ausgeführt ist. Eine Betätigung der Schalteinheit 36 kann von einer Steuereinheit 48, die insbesondere als eine Getriebesteuereinheit ausgeführt ist, gesteuert sein. Die Steuereinheit 48 kann dazu einen Aktuator 49, der zum Bewegen der Schalteinheit 36 ausgeführt ist, entsprechend ansteuern. Der Aktuator 49 kann bspw. als ein pneumatischer Aktuator oder ein elektromechanischer Aktuator ausgeführt sein. Die Steuereinheit 48 kann beispielsweise auch einen Betrieb der Antriebseinheit(en) 12 steuern.

Die dritte Übersetzungsstufe 38 verbindet die Zwischenwelle 28 trieblich mit der Ausgangswelle 30. Ein als Festrad ausgeführtes Antriebsrad 50 der dritten Übersetzungsstufe 38 ist drehfest auf der Zwischenwelle 28 angeordnet. Ein als Festrad ausgeführtes Abtriebsrad 52 der dritten Übersetzungsstufe 38 ist drehfest auf der Ausgangswelle 30 angeordnet. Die Räder 50 und 52 kämmen miteinander. Zweckmäßig ist die dritte Übersetzungsstufe 38 ebenfalls als eine Stirnradstufe mit zwei Stirnrädern ausgeführt. Die Ausgangswelle 30 ist vorzugsweise trieblich direkt mit der Gelenkwelle 16 (siehe Figur 1) verbunden.

Vorzugsweise weist die erste Übersetzungsstufe 32 eine Übersetzung (i) in einem Bereich zwischen 2,5 und 4,5 auf. Die zweite Übersetzungsstufe 34 weist bevorzugt eine Übersetzung (i) in einem Bereich zwischen 1 und 2,5 auf. Die dritte Übersetzungsstufe 38 weist vorzugsweise eine Übersetzung in einem Bereich zwischen 2,5 und 4 auf. Folglich wird erst am Ende des Getriebes 14A ein hohes Moment erzeugt. Ein geringer Bauraumbedarf wird dadurch begünstigt.

Zweckmäßig weist das Getriebe 14A neben den Übersetzungsstufe 32, 34 und 38 keine weitere Übersetzungsstufe und neben der Schalteinheit 36 keine weitere Schalteinheit auf. Das Getriebe 14A kann somit besonders kleinbauend, einfach und kostengünstig bzgl. Entwicklung und Herstellung sein.

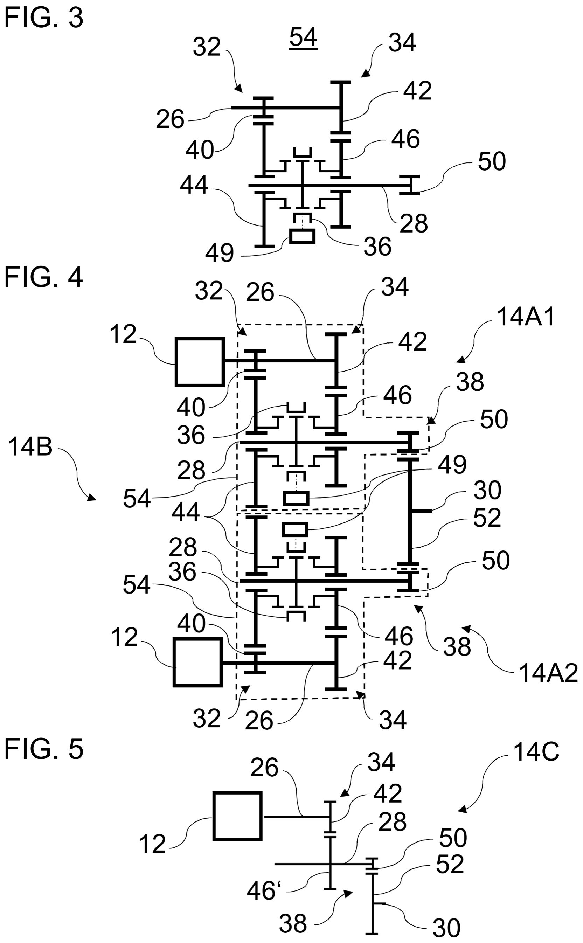

Es ist möglich, dass das Getriebe 14A aus einem modularen Getriebebaukasten abgeleitet ist. Der modulare Getriebebaukasten kann den Aufbau unterschiedlicher Getriebe mit einer großen Anzahl an Gleichteilen ermöglichen, um insbesondere Kosten zu sparen. Vorzugsweise kann der modulare Getriebebaukasten den Aufbau einiger oder aller von dem Getriebe 14A von Figur 2 und den Getrieben 14B-14E von den Figuren 4, 5 und 12 bis 16 ermöglichen.

Die Figur 3 zeigt ein Grundmodul 54, das von dem modularen Getriebebaukasten bevorzugt verwendet werden kann. Aus dem Grundmodul 54 lassen sich eine Vielzahl von unterschiedlichen Getrieben ableiten, insbesondere durch Mehrfachverwendung des Grundmoduls 54.

Das Grundmodul 54 kann besonders bevorzugt die bereits unter Bezugnahme auf die Figur 2 beschriebene Eingangswelle 26, Zwischenwelle 28, erste Übersetzungsstufe 32, zweite Übersetzungsstufe 34, Schalteinheit 36, den Aktuator 49 und optional das Antriebsrad 50 aufweisen. Das Grundmodul 54 kann ferner die Lager und/oder Dichtungen der Eingangswelle 26 und/oder der Zwischenwelle 28 aufweisen. Das Grundmodul 54 kann zusätzliche oder alternative Komponenten aufweisen. Insbesondere kann das Grundmodul 54 nur die erste Übersetzungsstufe 32, die zweite Übersetzungsstufe 34 und die Schalteinheit 36 aufweisen. Die Schalteinheit 36 kann beispielsweise im Bereich der Abtriebsräder der Übersetzungsstufen 32, 34 angeordnet sein, wie dargestellt ist. Alternativ kann die Schalteinheit 36 beispielsweise im Bereich der Antriebsräder der Übersetzungsstufen 32, 34 angeordnet sein (nicht dargestellt).

Es wird darauf hingewiesen, dass das Grundmodul 54 aus den genannten Komponenten gebildet werden kann, wobei der Achsenabstand zwischen der Eingangswelle 26 und der Zwischenwelle 28 bei jedem Grundmodul 54 gleich ist. Es ist allerdings möglich, dass bspw. aus Packagegründen eine Anpassung der räumlichen Anordnung zwischen der Eingangswelle 26 und der Zwischenwelle 28 bei Verwendung des Grundmoduls 54 vorgenommen wird. Eine Ebene, in der die Eingangswelle 26 und die Zwischenwelle verläuft, kann beim Verbauen des Grundmoduls 54 in unterschiedlichen Getrieben unterschiedlich sein, wobei der Achsabstand zwischen den Wellen 26, 28 gehalten wird.

Unter erneuter Bezugnahme auf die Figur 2 ist dargestellt, wie das Getriebe 14A aus dem Grundmodul 54 (dargestellt in gestrichelten Linien) abgeleitet werden kann. Das Getriebe 14A kann das Grundmodul 54 einmal verwenden und um das Abtriebsrad 52 und die Ausgangswelle 30 ergänzen, die bspw. anforderungsspezifisch angepasst sein können, um das Getriebe 14A zu schaffen.

Die Figur 4 zeigt ein weiteres Ausführungsbeispiel für das Getriebe 14 von Figur 1, das zum Abgrenzen von anderen Ausführungsbeispielen mit dem Bezugszeichen 14B versehen ist.

Das Getriebe 14B ist als ein lastschaltbares Zweiganggetriebe ausgeführt. Das Getriebe 14B ist von zwei Antriebseinheiten 12 antreibbar. Das Getriebe 14B weist ein erstes Teilgetriebe 14A1 und ein zweites Teilgetriebe 14A2 auf. Die Teilgetriebe 14A1 und 14A2 können jeweils im Wesentlichen wie das Getriebe 14A von Figur 2 aufgebaut sein. Beide Teilgetriebe 14A1, 14A2 können sich eine gemeinsame Ausgangswelle 30 teilen.

Beide Teilgetriebe 14A1, 14A2 sind mit einer eigenen Antriebseinheit 12 trieblich verbunden. Die beiden Abtriebsräder 44 der Teilgetriebe 14A1, 14A2 kämmen nicht miteinander. Die Teilgetriebe 14A1, 14A2 sind parallelgeschaltet. Das Getriebe 14B ist als ein Summiergetriebe aus den beiden Teilgetrieben 14A1, 14A2 gebildet. Die Teilgetriebe 14A1, 14A2 sind abtriebsseitig an der Ausgangswelle 30 trieblich miteinander gekoppelt. Die Ausgangswelle 30 kann trieblich mit der Gelenkwelle 16 (siehe Figur 1) verbunden werden. Die Summation der Leistung erfolgt durch die dritten Übersetzungsstufen 38, an dem die Antriebsräder 50 beider Teilgetriebe 14A1, 14A2 mit demselben Abtriebsrad 52 kämmen. Je nach Anforderung kann das Getriebe 14B von nur einer oder von beiden der Antriebseinheiten 12 angetrieben werden. Die Schalteinheiten 36 können unabhängig voneinander schalten, z. B. gesteuert durch eine Steuereinheit (nicht gesondert dargestellt).

Wie erwähnt, kann das Getriebe 14B von Figur 4 aus dem gleichen modularen Getriebebaukasten abgeleitet werden wie das Getriebe 14A von Figur 2. Dadurch können viele Gleichteilkomponenten verwendet werden.

Besonders bevorzugt verwendet das Getriebe 14B wieder das Grundmodul 54 (siehe Figur 3). Das Grundmodul 54 kann zweifach/doppelt im Getriebe 14B bzw. jeweils einmal in jedem Teilgetriebe 14A1, 14A2 des Getriebes 14B verwendet werden. Die beiden Grundmodule 54 können beispielsweise um das Abtriebsrad 52 und die Ausgangswelle 30 ergänzt werden, die bspw. anforderungsspezifisch angepasst sein können.

Es ist möglich, dass nicht alle Komponenten des Grundmoduls 54 als Gleichteilkomponenten in den Getrieben 14A und 14B verwendet werden, wobei eine im Wesentliche gleiche Ausbildung bevorzugt ist. Beispielweise können zwischen den Verzahnungen der dritten Übersetzungsstufen 38 bei den Getrieben 14A und 14B Mikrounterschiede bei gleicher Zähnezahl bestehen, um jeweils einen optimalen Eingriff des Antriebsrads 50 mit dem Abtriebsrad 52 bei dem Getriebe 14A und der beiden Antriebsräder 50 mit dem Abtriebsrad 52 bei dem Getriebe 14B zu gewährleisten. Weitere Unterschiede zwischen den Getrieben 14A und 14B (bzw. den Teilgetrieben 14A1, 14A2) können beispielsweise in jeweils angepassten Getriebegehäusen liegen.

Zusätzlich ist es möglich, dass das Grundmodul nicht nur zweifach, sondern häufiger miteinander in einem entsprechenden Summiergetriebe miteinander kombiniert werden kann, z. B dreifach oder vierfach. So kann bspw. ein Summiergetriebe aus drei oder mehr Grundmodulen aufgebaut werden, die jeweils von einer eigenen Antriebseinheit (insgesamt drei oder mehr Antriebseinheiten) angetrieben werden und abtriebsseitig miteinander verbunden sind.

Da sich die Belastung innerhalb des Grundmoduls auch bei mehrfacher Verwendung nicht ändert, muss dessen Auslegung und Dimensionierung auch bei Mehrfachverwendung nicht angepasst werden. Hierdurch ist eine sehr kosteneffiziente Abdeckung eines breiten Getriebe- und Antriebsstrangportfolios möglich.

Die Figur 5 zeigt ein weiteres Ausführungsbeispiel für das Getriebe 14 von Figur 1, das zum Abgrenzen von anderen Ausführungsbeispielen mit dem Bezugszeichen 14c versehen ist.

Das Getriebe 14C ist als ein Einganggetriebe mit konstanter Übersetzung ausgeführt. Das Getriebe 14C ist von einer Antriebseinheit 12 antreibbar.

Das Getriebe 14C kann ebenfalls aus dem Grundmodul 54 des modularen Getriebebaukastens abgeleitet werden, insbesondere durch Weglassen der ersten Übersetzungsstufe 32, Weglassen der Schalteinheit 36, Änderung des Losrads 46 (siehe Figur 3) in ein Festrad 46' und Ergänzung eines Abtriebsrads 52 und einer Ausgangswelle 30. Die Ausgangswelle 30 kann trieblich mit der Gelenkwelle 16 (siehe Figur 1) verbunden sein. Es ist möglich, dass das Getriebe 14C z. B. aus Packagegründen angepasste (kürzere) Wellen 26, 28 aufweist als das Grundmodul 54. Als Gleichteilkomponenten mit den Getrieben 14A und 14B kommen somit insbesondere das Antriebsrad 42 und das Antriebsrad 50 sowie die Lager und Dichtungen in der Wellen 26 und 28 in Betracht.

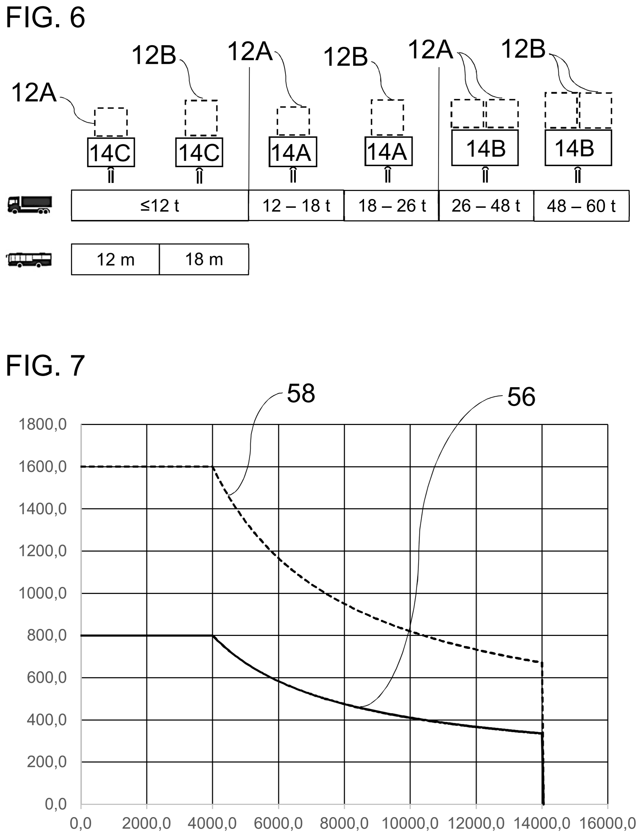

Die Figur 6 zeigt rein beispielhaft, wie mittels des beschriebenen modularen Getriebebaukastens der Aufbau eines breiten Antriebsstrangportfolios für unterschiedliche Anwendungen im Nutzfahrzeugbereich möglich ist.

Der modulare Antriebsstrangbaukasten kann zwei unterschiedliche, vorzugsweise elektrische, Antriebseinheiten 12A und 12B mit unterschiedlicher maximaler Leistungsausgabe aufweisen. Beispielsweise kann die Antriebseinheit 12B eine höhere Leistung als die Antriebseinheit 12A aufweisen. Der modulare Antriebsstrangbaukasten kann zudem den zuvor beschriebenen modularen Getriebebaukasten verwenden.

Lastkraftwagen bis beispielsweise 12 t können das (Eingang-)Getriebe 14C (siehe Figur 5) verwenden und je nach Anforderung die schwächere Antriebseinheit 12A oder die stärkere Antriebseinheit 12B. Ebenso können Omnibusse bis beispielsweise 12 Meter oder bis beispielsweise 18 Meter diese Antriebsstrangkonfigurationen verwenden. Es ist möglich, dass Omnibusse bis beispielsweise 18 Meter zwei Antriebsstränge gemäß der Antriebsstrangkonfiguration aufweisen.

Lastkraftwagen zwischen beispielsweise 12 t und 18 t können das (Zweigang-)Getriebe 14A (siehe Figur 2) und die Antriebseinheit 12A mit geringerer Leistung verwenden. Lastkraftwagen zwischen beispielsweise 18 t und 26 t können das (Zweigang-)Getriebe 14A (siehe Figur 2) und die stärkere Antriebseinheit 12B verwenden.

Lastkraftwagen zwischen beispielsweise 26 t und 48 t können das (Zweigang-)Getriebe 14B (siehe Figur 4) und zwei der schwächeren Antriebseinheiten 12A verwenden. Lastkraftwagen zwischen beispielsweise 48 t und 60 t können das (Zweigang-)Getriebe 14B (siehe Figur 4) und zwei der stärkeren Antriebseinheiten 12A verwenden.

Die modulare Konzeption des Antriebsstrangs und des Getriebes erlaubt es somit, eine gesamte Flotte von batterieelektrischen Nutzfahrzeugen auf einfache und kosteneffiziente Weise aufzubauen. Die Verwendung von jeweils zwei Antriebseinheiten 12A oder 12B bei den schweren Lastkraftwagen zwischen beispielsweise 26 t und 60 t kann auch aus Kostengründen sinnvoll sein, da die Verwendung einer einzigen großen Antriebseinheit überproportional teuer sein kann und sich bei Verwendung von jeweils zwei Antriebseinheiten größere Stückzahlen und somit größere Skaleneffekte erzielen lassen. Die gesamte Flotte kann lediglich zwei verschiedene Typen von Antriebseinheiten verwenden (siehe Figur 6).

Nachfolgend ist unter Bezugnahme auf die Figuren 4 und 7 bis 9 erläutert, wie die Lastschaltbarkeit zwischen den Gängen des Getriebes 14B erreicht werden kann.

Die Figur 7 zeigt ein Diagramm mit zwei beispielhaften Volllastkennlinien 56, 58. Eine Drehzahl der Antriebseinheiten ist auf der Abszisse (x-Achse) in U/min aufgetragen. Ein bereitgestelltes Drehmoment ist in Nm auf der Ordinate (Y-Achse) aufgetragen. Die Zahlenwerte auf den Achsen sind als rein beispielhaft anzusehen.

Die durchgezogene Volllastkennlinie 56 gibt ein dauerhaft fahrbares Volllastmoment für eine der Antriebseinheiten 12 an. Die Volllastkennlinie 58 gibt ein dauerhaft fahrbares Volllastmoment für beide Antriebseinheiten 12 an. Die gestrichelte Volllastkennlinie 58 ergibt sich aus einer Summation zweier Volllastkennlinien 56.

Schaltvorgänge des Getriebes 14B lassen sich grundsätzlich in zwei unterschiedliche Ausgangssituationen differenzieren.

Im ersten Fall kann ohne Zugkraftunterbrechung oder Zugkraftreduzierung geschaltet werden, da die vor und nach dem Schalten erforderliche Antriebsleistung, die z. B. von beiden Antriebseinheiten 12 aufbringbar ist, während des Schaltens (zumindest kurzzeitig) durch nur eine der beiden Antriebseinheiten 12 alleine bereitgestellt werden kann. Dies kann bezogen auf das Diagramm der Figur 7 beispielsweise der Fall sein, wenn ein Antriebsmoment erforderlich ist, das unterhalb oder auf der Kurve 56 liegt.

Im zweiten Fall kann nur mit einer Zugkraftreduzierung geschaltet werden, da die vor und nach dem Schalten erforderliche Antriebsleistung, die z. B. von beiden Antriebseinheiten 12 aufbringbar ist, während des Schaltens nicht durch nur eine der beiden Antriebseinheiten 12 alleine bereitgestellt werden kann. Dies kann bezogen auf das Diagramm der Figur 7 beispielsweise der Fall sein, wenn ein Antriebsmoment erforderlich ist, das zwischen den Kurven 58 und 56 liegt.

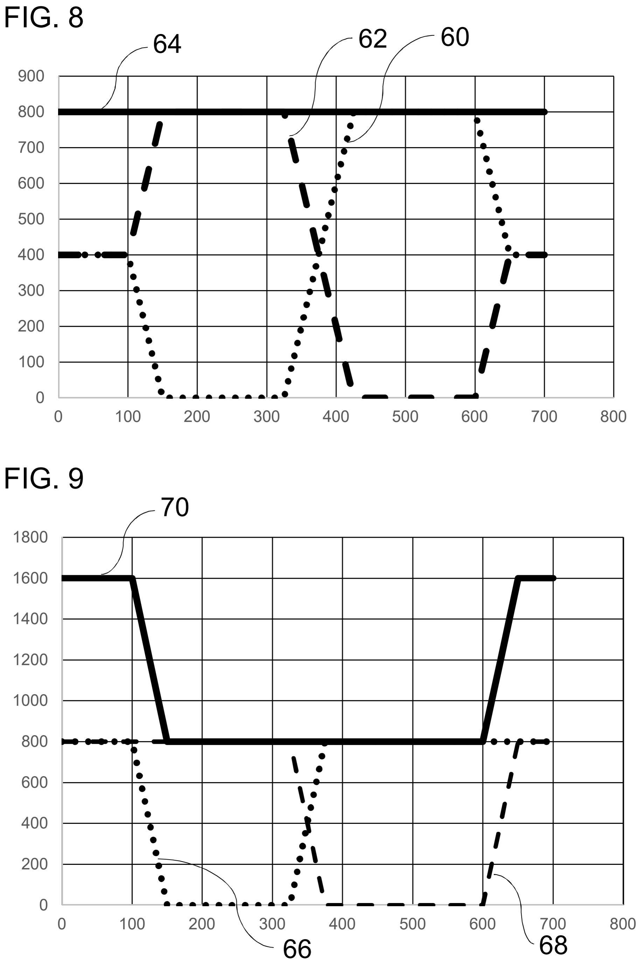

Die Figur 8 zeigt einen Schaltverlauf für den ersten Fall unter der Annahme, dass die Fahrzeuggeschwindigkeit während des Schaltvorgangs konstant bleibt. Die Leistungsanpassung erfolgt über das Antriebsmoment. Die Figur 8 zeigt ein Antriebsmomentenverlauf in Nm (y-Achse) aufgetragen über die Zeit in ms (X-Achse). Die Zahlenwerte auf den Achsen sind als rein beispielhaft anzusehen.

Die gepunktete Kurve 60 gibt ein Antriebsmoment der mit dem ersten Teilgetriebe 14A1 verbundenen Antriebseinheit 12 (z. B. die obere Antriebseinheit 12 in Figur 4) an. Die gestrichelte Kurve 62 gibt ein Antriebsmoment der mit dem zweiten Teilgetriebe 14A2 verbundenen Antriebseinheit 12 (z. B. die untere Antriebseinheit 12 in Figur 4) an. Die durchgezogene Kurve 64 wiederum gibt ein aus den Kurven 60 und 62 aufsummiertes Antriebsmoment an.

Vor dem Schaltvorgang verbinden beide Schalteinheiten 36 jeweils das als Losrad ausgeführte Abtriebsrad 44 trieblich mit der Zwischenwelle 28, und die Schalteinheiten 36 sollen jeweils auf das Abtriebsrad 46 umgeschaltet werden (oder umgekehrt). Die Schalteinheiten 36 können zweckmäßig nur im Wesentlichen lastfrei schalten. Um den Schaltvorgang zu initialisieren, beginnt die mit dem ersten Teilgetriebe 14A1 verbundene Antriebseinheit 12 zum Zeitpunkt 100 ms das Antriebsmoment zu reduzieren (siehe Kurve 60). Das Antriebsmoment kann bis auf annähernd null reduziert werden (ungefähr bei 150 ms). Gleichzeitig erhöht die mit dem zweiten Teilgetriebe 14A2 verbundene Antriebseinheit 12 ihr Antriebsmoment synchron (Kurve 62). Die Antriebsmomentreduzierung wird durch die Antriebsmomenterhöhung vollständig kompensiert. Das resultierende Antriebsmoment bleibt konstant (Kurve 64).

Sobald das Antriebsmoment der mit dem erstem Teilgetriebe 14A1 verbundenen Antriebseinheit 12 annähernd null ist (bei ca. 150 ms), beginnt die Schalteinheit 36 des ersten Teilgetriebes 14A1 zu schalten (zwischen 150 ms und 330 ms), und zwar von Abtriebsrad 44 zu Abtriebsrad 46. Die Schaltung kann im Westlichen lastfrei erfolgen. Während des Schaltens bleibt das resultierende Antriebsmoment konstant (Kurve 64), da es alleine von der Antriebseinheit 12 des zweiten Teilgetriebes 14A2 bereitgestellt werden kann.

Nach dem Schalten der Schalteinheit 36 des ersten Teilgetriebes 14A1 wird das Antriebsmoment der mit dem ersten Teilgetriebe 14A1 verbundenen Antriebseinheit 12 erhöht (Kurve 60). Das Antriebsmoment der mit dem zweiten Teilgetriebe 14A2 verbunden Antriebseinheit 12 wird gleichzeitig bis auf annähernd null reduziert (Kurve 62). Nun kann die Schalteinheit 36 des zweiten Teilgetriebes 14A2 schalten (bei ca. 420 ms), und zwar ebenfalls von Abtriebsrad 44 zu Abtriebsrad 46. Während des Schaltens bleibt das resultierende Antriebsmoment wieder konstant (Kurve 64), da es alleine von der Antriebseinheit 12 des ersten Teilgetriebes 14A1 bereitgestellt werden kann.

Nach dem Schalten der Schalteinheit 36 des zweiten Teilgetriebes 14A2 können die Antriebsmomente der beiden Antriebseinheiten 12 wieder aneinander angeglichen werden.

Die beiden Schalteinheiten 36 werden somit zeitverzögert nacheinander betätigt. Zwischen den Schaltvorgängen der beiden Schalteinheiten 36 werden die Antriebsmomente der Antriebseinheiten 12 wie erläutert angepasst.

Es ist möglich, dass zum Beginn oder zum Ende des Schaltvorgangs nicht beide Antriebseinheiten 12 das gleiche Antriebsmoment bereitstellen. Es kann beispielsweise auch eine der beiden Antriebseinheiten 12 gar kein Antriebsmoment bereitstellen.

Es ist auch möglich, dass die Antriebsmomenterhöhung der jeweils aktiven Antriebseinheit 12 während des Schaltvorgangs auf eine maximale Dauerleistung / Volllast nicht ausreicht, um die Antriebsmomentverringerung der anderen Antriebseinheit 12 vollständig zu kompensieren. In diesem Fall kann jedoch zumindest eine Zugkraftunterbrechung verhindert und eine Zugkraftverringerung während des Schaltvorgangs deutlich verringert werden.

Die Figur 9 zeigt einen Schaltverlauf für den zweiten Fall (nur mit Zugkraftreduzierung schaltbar). Die Figur 9 zeigt wieder ein Antriebsmomentenverlauf in Nm (y-Achse) aufgetragen über die Zeit in ms (x-Achse). Die Zahlenwerte auf den Achsen sind als rein beispielhaft anzusehen.

Die gepunktete Kurve 66 gibt ein Antriebsmoment der mit dem ersten Teilgetriebe 14A1 verbundenen Antriebseinheit 12 an. Die gestrichelte Kurve 68 gibt ein Antriebsmoment der mit dem zweiten Teilgetriebe 14A2 verbundenen Antriebseinheit 12 an. Die durchgezogene Kurve 70 wiederum gibt ein aus den Kurven 66 und 68 aufsummiertes Antriebsmoment an.

Vor dem Schaltvorgang verbinden beide Schalteinheiten 36 jeweils das Abtriebsrad 44 trieblich mit der Zwischenwelle 28, und die Schalteinheiten 36 sollen jeweils auf das Abtriebsrad 46 umgeschaltet werden (oder umgekehrt). Die Schalteinheiten 36 können zweckmäßig nur im Wesentlichen lastfrei schalten. Um den Schaltvorgang zu initialisieren, beginnt die mit dem ersten Teilgetriebe 14A1 verbundene Antriebseinheit 12 zum Zeitpunkt 100 ms das Antriebsmoment zu reduzieren (siehe Kurve 66). Das Antriebsmoment kann bis auf annähernd null reduziert werden (ungefähr bei 150 ms). Die mit dem zweiten Teilgetriebe 14A2 verbundene Antriebseinheit 12 erhöht ihr Antriebsmoment nicht (Kurve 68), da sie bereits unter Volllast betrieben wird. Die Antriebsmomentreduzierung wird nicht kompensiert. Das resultierende Antriebsmoment (Kurve 70) entspricht der mit dem zweiten Teilgetriebe 14A2 verbundenen Antriebseinheit 12 (Kurve 68). Es kommt zu einer Zugkraftverringerung.

Sobald das Antriebsmoment der mit dem erstem Teilgetriebe 14A1 verbundenen Antriebseinheit 12 annähernd null ist (bei ca. 150 ms), beginnt die Schalteinheit 36 des ersten Teilgetriebes 14A1 zu schalten (zwischen 150 ms und 330 ms), und zwar vom Abtriebsrad 44 zum Abtriebsrad 46. Die Schaltung kann im Westlichen lastfrei erfolgen. Während des Schaltens bleibt das resultierende Antriebsmoment konstant (Kurve 64), da es alleine von der Antriebseinheit 12 des zweiten Teilgetriebes 14A2 bereitgestellt wird.

Nach dem Schalten der Schalteinheit 36 des ersten Teilgetriebes 14A1 wird das Antriebsmoment der mit dem ersten Teilgetriebe 14A1 verbundenen Antriebseinheit 12 wieder bis auf Volllast erhöht (Kurve 66). Das Antriebsmoment der mit dem zweiten Teilgetriebe 14A2 verbunden Antriebseinheit 12 wird gleichzeitig bis auf annähernd null reduziert (Kurve 68). Nun kann die Schalteinheit 36 des zweiten Teilgetriebes 14A2 schalten (bei ca. 420 ms), und zwar auch vom Abtriebsrad 44 zum Abtriebsrad 46. Während des Schaltens bleibt das resultierende Antriebsmoment wieder konstant (Kurve 70), da es alleine von der Antriebseinheit 12 des ersten Teilgetriebes 14A1 bereitgestellt wird.

Nach dem Schalten der Schalteinheit 36 des zweiten Teilgetriebes 14A2 wird das Antriebsmoment der mit dem zweiten Teilgetriebe 14A2 verbundenen Antriebseinheit 12 wieder auf Volllast erhöht (Kurve 68). Das resultierende Antriebsmoment (Kurve 70) wird erhöht und entspricht dann wieder dem resultierenden Antriebsmoment vor dem gesamten Schaltvorgang.

Es ist möglich, dass die Zugkraftverringerung im Beispiel von Figur 8 während des Schaltens dadurch verringert oder sogar vollständig kompensiert wird, dass die jeweils aktive Antriebseinheit während des Schaltvorgangs kurzzeitig mit der jeweils verfügbaren Spitzenleistung anstelle der maximalen Dauerleistung (wie dargestellt) betrieben wird.

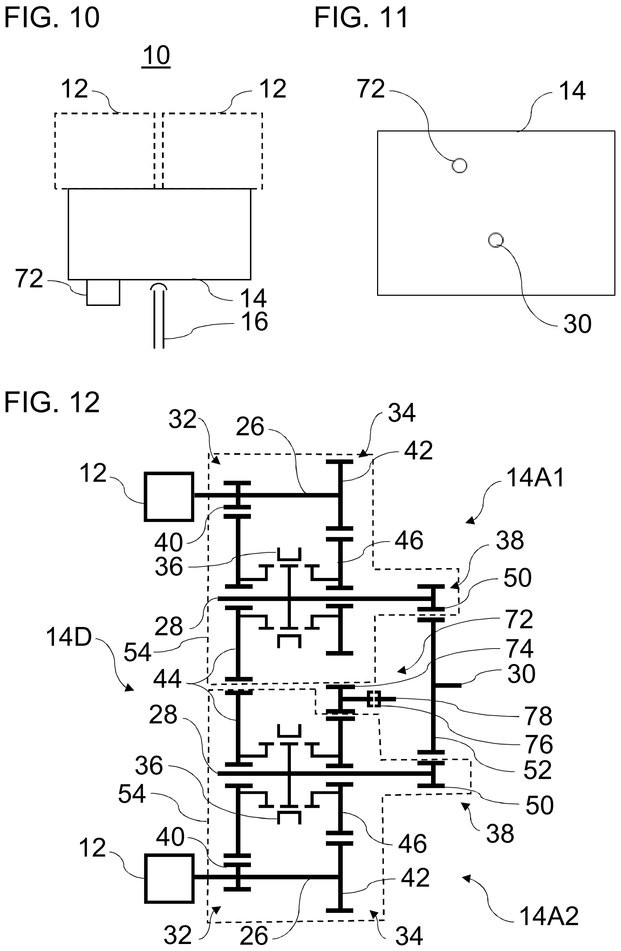

Nachfolgend ist unter Bezugnahme auf die Figuren 10 bis 16 ein Ausführungsbeispiel beschrieben, bei dem ein Getriebe einen Nebenabtrieb aufweist.

Die Figur 10 zeigt einen Antriebsstrang 10, der zwei, vorzugsweise elektrische, Antriebseinheiten 12 aufweist und ein Getriebe 14D aufweist. Das Getriebe 14D weist einen Nebenabtrieb 72 und einen Hauptabtrieb, der trieblich mit der Gelenkwelle 16 verbunden ist.

Die Figur 11 zeigt rein schematisch, dass der Nebenabtrieb 72 und der Hauptabtrieb in Form der Ausgangswelle 30 in einer Höhenrichtung und einer Breitenrichtung voneinander beabstandet sein können. Zusätzlich oder alternativ können der Nebenabtrieb 72 und die Ausgangswelle 30 auch in einer Längenrichtung voneinander beabstandet sein.

Die Figur 12 zeigt das Getriebe 14D, das mit den beiden Antriebseinheiten 12 trieblich verbunden ist.

Das Getriebe 14D kann beispielsweise wie das Getriebe 14B von Figur 4 aufgebaut sein. Das zweite Teilgetriebe 14A2 kann den Nebenabtrieb 72 aufweisen. Das Grundmodul 54 des zweiten Teilgetriebes 14A2 kann um den Nebenabtrieb 72 ergänzt sein.

Es ist beispielsweise auch möglich, dass der Nebenabtrieb 72 in dem Getriebe 14A von Figur 2 ergänzt wird, z. B. am Abtriebsrad 46, oder in dem Getriebe 14C von Figur 5 ergänzt wird, z. B. am Abtriebsrad 46'.

Der Nebenabtrieb 72 kann ein (Neben-)Abtriebsrad bzw. Eingangsrad 74, eine Schalteinheit 76 und eine (Neben-)Abtriebswelle (Ausgangswelle) 78 als Ausgabeelement aufweisen. An der Abtriebswelle 78 können je nach Anforderung unterschiedliche Komponenten angeschlossen werden, z. B. Arbeitswerkzeuge, Wasserpumpen für Feuerwehrfahrzeuge oder Hydraulikpumpen für hydraulisch angetriebene Komponenten.

Das Eingangsrad 74 ist so angeordnet, dass es mit dem Abtriebsrad 46 des zweiten Teilgetriebes 14A2 kämmt. Die Schalteinheit 76 ist dazu ausgebildet, wahlweise das Eingangsrad 74 trieblich mit der Abtriebswelle 78 zu verbinden oder nicht zu verbinden. Die Schalteinheit 76 kann beispielsweise als formschlüssige oder reibschlüssige Schalteinheit, vorzugsweise Kupplung, ausgeführt sein.

Sofern die mit dem zweiten Teilgetriebe 14A2 verbundene Antriebseinheit 12 aktiviert ist, wird das Eingangsrad 74 des Nebenabtriebs 72 gedreht, unabhängig von einer Schaltstellung der Schalteinheit 36 des zweiten Teilgetriebes 14A2. Der Nebenabtrieb 72 wird von der Antriebseinheit 12 des zweiten Teilgetriebes 14A2 angetrieben. Eine Stellung der Schalteinheit 76 bestimmt, ob die Abtriebswelle 78 des Nebenabtriebs 72 gedreht wird oder nicht.

Das Getriebe 14D ermöglicht in unterschiedlichen Schaltstellungen der Schalteinheiten 36 und 72, dass eine oder beide Antriebseinheiten 12 die Ausgangswelle 30 antreiben und/oder die Abtriebswelle 78 des Nebenabtriebs 72 antreiben. Insbesondere ermöglicht das Getriebe 14D, das die mit dem ersten Teilgetriebe 14A1 verbundene Antriebseinheit 12 nur die Ausgangswelle 30 antreiben kann (und das Kraftfahrzeug somit fahren) und dass die mit dem zweiten Teilgetriebe 14A2 verbundene Antriebseinheit 12 nur die Abtriebswelle 78 des Nebenabtriebs 72 antreibt.

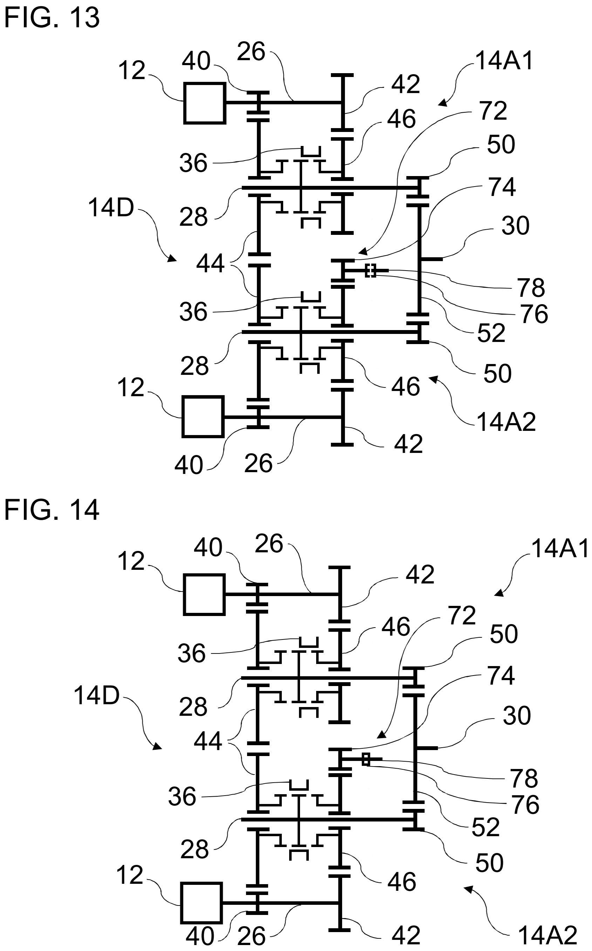

Nachfolgend sind unter Bezugnahme auf die Figuren 13 bis 15 Kombinationen von Schaltstellungen des Getriebes 14D erläutert. Die Figuren 13 bis 15 zeigen jeweils das Getriebe 14D von Figur 12, wobei einige der Bezugszeichen zur besseren Übersicht über die Schaltstellungen der Schalteinheiten 36, 76 nicht dargestellt sind.

In der Figur 13 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des zweiten Teilgetriebes 14A2 verbindet das Abtriebsrad 46 trieblich mit der Zwischenwelle 28 des zweiten Teilgetriebes 14A2. Die Schalteinheit 76 des Nebenabtriebs 72 ist offen. Das Kraftfahrzeug kann somit von beiden Antriebseinheiten 12 gleichzeitig angetrieben werden (Lastfluss je Teilgetriebe 14A1, 14A2 jeweils z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30)). Die Abtriebswelle 78 des Nebenabtriebs 72 ist nicht angetrieben. Selbiges lässt sich zum Beispiel auch erreichen, wenn die Schalteinheiten 36 jeweils die Antriebsräder 44 trieblich mit der Zwischenwelle 28 des jeweiligen Teilgetriebes 14A1, 14A2 verbinden.

In der Figur 14 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des ersten Teilgetriebes 14A1 kann auch das Antriebsrad 44 mit der Zwischenwelle 28 trieblich verbinden. Die Schalteinheit 36 des zweiten Teilgetriebes 14A2 ist in einer Neutralstellung. Die Schalteinheit 76 des Nebenabtriebs 72 ist geschlossen. Das Kraftfahrzeug kann somit von der mit dem ersten Teilgetriebe 14A1 verbundenen Antriebseinheit 12 angetrieben werden (Lastfluss im ersten Teilgetriebe 14A1 z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30). Gleichzeitig kann die Abtriebswelle 78 des Nebenabtriebs 72 von der mit dem zweiten Teilgetriebe 14A2 verbundenen Antriebseinheit 12 angetrieben werden (Lastfluss im zweiten Teilgetriebe 14A2 z. B.: Antriebseinheit 12 zu Eingangswelle 26 zu Antriebsrad 42 zu Abtriebsrad 46 zu Eingangsrad 74 zu Schalteinheit 76 zu Abtriebswelle 78).

Das zweite Teilgetriebe 14A2 und die damit verbundene Antriebseinheit 12 arbeiten unabhängig von dem ersten Teilgetriebe 14A1 und der damit verbundenen Antriebseinheit 12. Somit kann die Leistungsanforderungen des Nebenabtriebs 72 drehmoment- und drehzahlspezifisch erfüllt werden.

Beispielsweise kann von der in Figur 13 gezeigten Schaltstellung zu der in der Figur 14 gezeigten Schaltstellung umgeschaltet werden, wenn der Nebenabtrieb 72 zugeschaltet werden soll. Dazu schaltet die Schalteinheit 36 des zweiten Teilgetriebes 14A2 in die Neutralstellung. Die Eingangswelle 26 des zweiten Teilgetriebes 14A2 wird z. B. von der verbundenen Antriebseinheit 12 abgebremst, sodass die Schalteinheit 76 geschlossen werden kann.

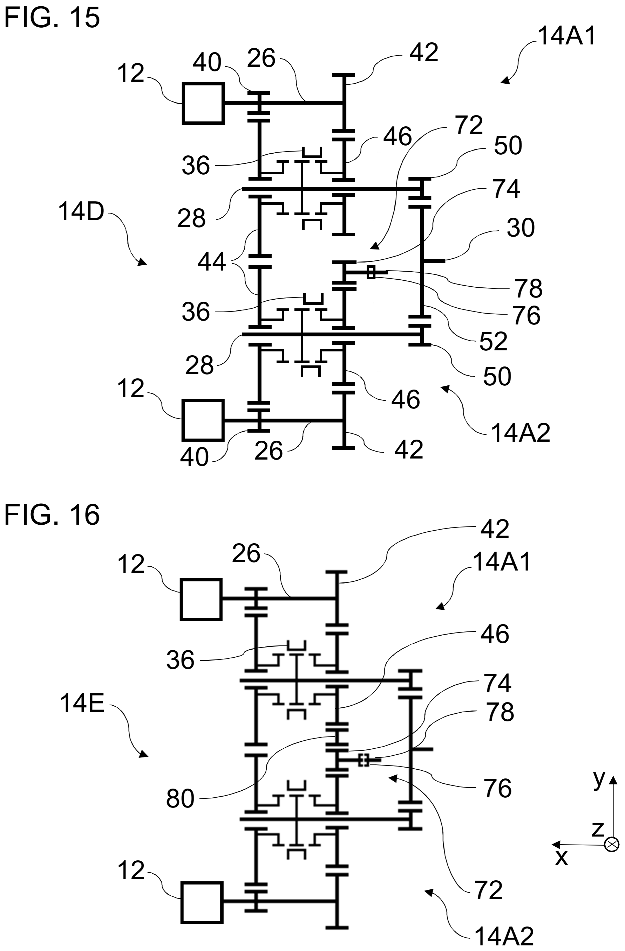

In der Figur 15 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des ersten Teilgetriebes 14A1 kann auch das Antriebsrad 44 mit der Zwischenwelle 28 trieblich verbinden. Die Schalteinheit 36 des zweiten Teilgetriebes 14A2 verbindet das Abtriebsrad 46 trieblich mit der Zwischenwelle 28 des zweiten Teilgetriebes 14A2. Die Schalteinheit 36 des ersten Teilgetriebes 14A1 kann auch das Antriebsrad 44 mit der Zwischenwelle 28 trieblich verbinden. Die Schalteinheit 76 des Nebenabtriebs 72 ist geschlossen. Das Kraftfahrzeug kann somit von beiden Antriebseinheiten 12 angetrieben werden (Lastfluss je Teilgetriebe 14A1, 14A2 z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30). Gleichzeitig kann die Abtriebswelle 78 des Nebenabtriebs 72 von der mit dem zweiten Teilgetriebe 14A2 verbundenen Antriebseinheit 12 angetrieben werden (Lastfluss im zweiten Teilgetriebe 14A2 z. B.: Antriebseinheit 12 zu Eingangswelle 26 zu Antriebsrad 42 zu Abtriebsrad 46 zu Eingangsrad 74 zu Schalteinheit 76 zu Abtriebswelle 78). Der Nebenabtrieb 72 kann zusätzlich auch noch von der Antriebseinheit 12, die mit dem ersten Teilgetriebe 14A1 verbunden ist, angetrieben werden.

Die Schaltstellung der Figur 15 kann bspw. verwendet werden, wenn die erforderliche Antriebsleistung zum Antrieben des Kraftfahrzeugs nicht allein durch die mit dem ersten Teilgetriebe 14A1 verbundene Antriebseinheit 12 alleine bereitgestellt werden kann. Die erforderliche Differenzleistung $P_{diff}$ kann über die Antriebseinheit 12, die mit dem zweiten Teilgetriebe 14A2 verbunden ist, bereitgestellt werden. Die Differenzleistung $P_{diff}$ ergibt sich als Differenz aus der der maximalen (Dauer-)Antriebsleistung $P_{max(A2)}$ der Antriebseinheit 12, die mit dem zweiten Teilgetriebe 14A2 verbunden ist, und der zum Antrieben des Nebenabtriebs 72 bereitgestellten Antriebsleistung $P_{PTO}$.

$$P_{diff} = P_{max(A2)} - P_{PTO}$$

Zum Einnehmen der Schaltstellung kann die Drehzahl der Eingangswelle 26 des zweiten Teilgetriebes 14A2 an die Drehzahl der Eingangswelle 26 des ersten Teilgetriebes 14A2 angeglichen werden, z. B. mittels der Antriebseinheit 12. Die Schalteinheit 36 des zweiten Teilgetriebes 14A2 verbindet das Abtriebsrad 46 trieblich mit der Zwischenwelle 28. An der Ausgangswelle 30 kann das zweite Teilgetriebe 14A2 nun mittels des Antriebsrads 50 die Leistung $P_{diff}$ zuführen. In diesem Fall kann die Leistungsanforderung des Nebenabtriebs 72 nur drehmomentspezifisch erfüllt werden. Diese Betriebsweise kann nur im zweiten Gang möglich sein.

Falls erforderlich kann der Lastfluss zum Nebenabtrieb 72 sowohl im Stillstand als auch während der Fahrt über die Schalteinheit 76 abgekoppelt werden, so dass beide Antriebseinheiten 12 zum Antrieben des Kraftfahrzeugs zur Verfügung stehen. Falls erforderlich kann der Lastfluss zum Nebenabtrieb 72 sowohl im Stillstand als auch während der Fahrt über die Schalteinheit 76 eingekoppelt werden.

Die Figur 16 zeigt ein Getriebe 14E, das eine Weiterbildung zum Getriebe 14D darstellt. Aus Übersichtsgründen sind nur wenige Bezugseichen angegeben.

Das Getriebe 14E weist ein zusätzliches Koppelelement in Form eines (Abtriebs-)Rads 80 auf. Das Abtriebsrad 80 kann das Abtriebsrad 46 des ersten Teilgetriebes 14A1 mit dem Eingangsrad 74 des Nebenantriebs 72 trieblich verbinden. Das Abtriebsrad 80 ist verschiebbar im Getriebe 14E aufgenommen, um wahlweise eine triebliche Verbindung zwischen dem Abtriebsrad 46 des ersten Teilgetriebes 14A1 und dem Eingangsrad 74 des Nebenantriebs 72 zu schaffen oder zu trennen. Beispielsweise kann ein Zahnradmittelpunkt des Abtriebsrads 80 innerhalb einer y-z-Ebene (bezogen auf das Kraftfahrzeug und wie in Figur 16 angegeben) mechanisch verschoben werden, um wahlweise in Eingriff oder außer Eingriff mit dem Abtriebsrad 46 des ersten Teilgetriebes 14A1 und dem Eingangsrad 74 des Nebenantriebs 72 zu kommen.

Das Getriebe 14E ermöglicht insbesondere für Anwendungen, die hohe Leistungsanforderungen an den Nebenabtrieb 72 stellen, dass optional auch die mit dem ersten Teilgetriebe 14A1 verbundene Antriebseinheit 12 zum Antrieben des Nebenabtrieb 72 trieblich verbunden werden kann (Lastfluss im ersten Teilgetriebe 14A1 z. B.: Antriebseinheit 12 zu Eingangswelle 26 zu Antriebsrad 42 zu Abtriebsrad 46 zu Abtriebsrad 80 zu Eingangsrad 74 zu Schalteinheit 76 zu Abtriebswelle 78). Diese Betriebsweise ist zweckmäßig nur im Stand und bei Neutralstellung beider Schalteinheiten 36 möglich.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

Bezugszeichenliste

| 10 | Antriebsstrang |
| 12 | Antriebseinheit |
| 12A | Antriebseinheit |
| 12B | Antriebseinheit |
| 14 | Getriebe |
| 14A | Getriebe |
| 14A1 | Erstes Teilgetriebe |
| 14A2 | Zweites Teilgetriebe |
| 14B | Getriebe |
| 14C | Getriebe |
| 14D | Getriebe |
| 14E | Getriebe |
| 16 | Gelenkwelle |
| 18 | Achsgetriebe |

| 20 | Radwelle |
|---|---|
| 22 | Rad |
| 24 | Traktionsenergiespeicher |
| 26 | Eingangswelle |
| 28 | Zwischenwelle |
| 30 | Ausgangswelle |
| 32 | Erste Übersetzungsstufe |
| 34 | Zweite Übersetzungsstufe |
| 36 | Schalteinheit |
| 38 | Dritte Übersetzungsstufe |
| 40 | Antriebsrad (z. B. Festrad) |
| 42 | Antriebsrad (z. B. Festrad) |
| 44 | Abtriebsrad (z. B. Losrad) |
| 46 | Abtriebsrad (z. B. Losrad) |
| 46' | Abtriebsrad (Festrad) |
| 48 | Steuereinheit |
| 49 | Aktuator |
| 50 | Antriebsrad (z. B. Festrad) |
| 52 | Abtriebsrad (z. B. Festrad) |
| 54 | Grundmodul |
| 56 | Volllastkennlinie |
| 58 | Volllastkennlinie |
| 60 | Antriebsmomentkurve |
| 62 | Antriebsmomentkurve |
| 64 | Resultierende Antriebsmomentkurve |
| 66 | Antriebsmomentkurve |
| 68 | Antriebsmomentkurve |
| 70 | Resultierende Antriebsmomentkurve |
| 72 | Nebenabtrieb |
| 74 | Eingangsrad |
| 76 | Schalteinheit |
| 78 | Abtriebswelle |
| 80 | Abtriebsrad |

**Patentansprüche**

1. Getriebe (14B), vorzugsweise Zweiganggetriebe, für ein Kraftfahrzeug, vorzugsweise Nutzfahrzeug, aufweisend:

   ein erstes Teilgetriebe (14A1), das zum trieblichen Verbinden mit einer ersten Antriebseinheit (12) ausgebildet ist, wobei das erste Teilgetriebe (14A1) zwei Übersetzungsstufen (32, 34) und eine Schalteinheit (36) zum Schalten zwischen den zwei Übersetzungsstufen (32, 34) aufweist; ein zweites Teilgetriebe (14A2), das zum trieblichen Verbinden mit einer zweiten Antriebseinheit (12) ausgebildet ist, wobei das zweite Teilgetriebe (14A2) zwei Übersetzungsstufen (32, 34) und eine Schalteinheit (36) zum Schalten zwischen den zwei Übersetzungsstufen (32, 34) aufweist; ein Ausgangselement (30), das trieblich mit einem Abtrieb des ersten Teilgetriebes (14A1) und einem Abtrieb des zweiten Teilgetriebes (14A2) verbunden ist; und eine Steuereinheit (48), die zum Steuern eines Gangwechsels des Getriebes (14B) ausgebildet ist, wobei für den Gangwechsel die Schalteinheit (36) des ersten Teilgetriebes (14A1) und die Schalteinheit (36) des zweiten Teilgetriebes (14A2) zeitversetzt, vorzugsweise sequenziell, geschaltet werden.

2. Getriebe (14B) nach Anspruch 1, wobei die Steuereinheit (48) dazu ausgebildet ist, dass:
   zunächst die Schalteinheit (36) des ersten Teilgetriebes (14A1) schaltet und dann die Schalteinheit (36) des zweiten Teilgetriebes (14A2) schaltet, vorzugsweise nach Abschluss des Schaltens der Schalteinheit (36) des ersten Teilgetriebes (14A1) und/oder vorzugsweise nach Verstreichen einer Zeitdauer bis die Schalteinheit (36) des zweiten Teilgetriebes (14A2) annähernd lastfrei ist.

3. Getriebe (14B) nach Anspruch 1 oder Anspruch 2, wobei die Steuereinheit (48) dazu ausgebildet ist, dass:
   das erste Teilgetriebe (14A1) und das zweite Teilgetriebe (14A2) während des Gangwechsels nacheinander eine Antriebsleistung durch das Getriebe (14B) übertragen, wobei vorzugsweise jeweils die Schalteinheit (36) eines der Teilgetriebe (14A1, 14A2) schaltet und das jeweils andere der Teilgetriebe (14A1, 14A2) die Antriebsleistung überträgt.

4. Getriebe (14B) nach einem der vorherigen Ansprüche, wobei:

   die zwei Übersetzungsstufen (32, 34) des ersten Teilgetriebes (14A1) die gleichen Übersetzungen aufweisen wie die zwei Übersetzungsstufen (32, 34) des zweiten Teilgetriebes (14A2); und/oder die zwei Übersetzungsstufen (32, 34) des ersten Teilgetriebes (14A1) und die zwei Übersetzungsstufen (32, 34) des zweiten Teilgetriebes (14A2) als Gleichteilkomponenten ausgebildet sind.

5. Getriebe (14B) nach einem der vorherigen Ansprüche, wobei:

   das erste Teilgetriebe (14A1) und das zweite Teilgetriebe (14A2) gleich viele Gänge aufweisen; und/oder das erste Teilgetriebe (14A1) und das zweite Teilgetriebe (14A2) jeweils als Zweiganggetriebe ausgeführt sind; und/oder das erste Teilgetriebe (14A1) und das zweite Teilgetriebe (14A2) im Wesentlichen gleich aufgebaut sind.

6. Getriebe (14B) nach einem der vorherigen Ansprüche, wobei:

die Schalteinheit (36) des ersten Teilgetriebes (14A1) und die Schalteinheit (36) des zweiten Teilgetriebes (14A2) unabhängig voneinander schaltbar sind.

7. Getriebe (14B) nach einem der vorherigen Ansprüche, wobei:

das Getriebe (14B) als ein Summiergetriebe aus dem ersten Teilgetriebe (14A1) und dem zweiten Teilgetriebe (14A2) gebildet ist; und/oder das erste Teilgetriebe (14A1) und das zweite Teilgetriebe (14A2) parallel geschaltet sind.

8. Getriebe (14B) nach einem der vorherigen Ansprüche, wobei:

das Getriebe (14B) lastschaltbar ist; und/oder das erste Teilgetriebe (14A1) und das zweite Teilgetriebe (14A2) jeweils nicht-lastschaltbar sind.

9. Getriebe (14B) nach einem der vorherigen Ansprüche, wobei:

die Schalteinheit (36) des ersten Teilgetriebes (14A1) und/oder die Schalteinheit (36) des zweiten Teilgetriebes (14A2) zum nur im Wesentlichen lastfreien Schalten ausgeführt ist; und/oder die Schalteinheit (36) des ersten Teilgetriebes (14A1) und/oder die Schalteinheit (36) des zweiten Teilgetriebes (14A2) als eine formschlüssige Schalteinheit ausgebildet ist, vorzugsweise als Klauenkupplung.

10. Getriebe (14B) nach einem der vorherigen Ansprüche, wobei: die zwei Übersetzungsstufen (32, 34) des ersten Teilgetriebes (14A1) und/oder die zwei Übersetzungsstufen (32, 34) des zweiten Teilgetriebes (14A2) als Radstufen, vorzugsweise Stirnradstufen, ausgebildet sind.

11. Getriebe (14B) nach einem der vorherigen Ansprüche, wobei das erste Teilgetriebe (14A1) und das zweite Teilgetriebe (14A1) jeweils aufweisen:

eine Eingangswelle (26); eine Zwischenwelle (28); die zwei Übersetzungsstufen (32, 34), über die die Eingangswelle (26) jeweils trieblich mit der Zwischenwelle (28) verbindbar ist; die Schalteinheit (36), über die wahlweise die eine oder die andere der zwei Übersetzungsstufen (32, 34) trieblich mit der Eingangswelle (26) oder der Zwischenwelle (28) verbindbar ist; eine dritte Übersetzungsstufe (38), über die die Zwischenwelle (28) trieblich mit dem Ausgangselement (30) verbunden ist.

12. Antriebsstrang (10) für ein Kraftfahrzeug, vorzugsweise ein Nutzfahrzeug, aufweisend:

eine erste, vorzugsweise elektrische, Antriebseinheit (12); eine zweite, vorzugsweise elektrische, Antriebseinheit (12); und ein Getriebe (14b) nach einem der vorherigen Ansprüche, wobei die erste Antriebseinheit (12) trieblich mit dem ersten Teilgetriebe (14A1) verbunden ist und die zweite Antriebseinheit (12) trieblich mit dem zweiten Teilgetriebe (14A2) verbunden ist.

13. Antriebsstrang (10) nach Anspruch 12, wobei die Steuereinheit (48) dazu ausgebildet ist, dass:

während des Schaltens der Schalteinheit (36) einer der Teilgetriebe (14A1, 14A2) eine Antriebsleistungsverringerung der Antriebseinheit (12), die mit dem Teilgetriebe (14A1), dessen Schalteinheit (36) gerade schaltet, verbunden ist, durch eine Antriebsleistungserhöhung derjenigen Antriebseinheit (12), die trieblich mit dem Teilgetriebe (14A2), dessen Schalteinheit (36) gerade nicht schaltet, verbunden ist, zumindest teilweise kompensiert wird, vorzugsweise für beide Antriebseinheiten (12) nacheinander; und/oder vor dem Schalten der Schalteinheiten (36) der Teilgetriebe (14A1, 14A2) eine Antriebsleistungsverringerung derjenigen Antriebseinheit (12), die mit dem Teilgetriebe (14A1), dessen Schalteinheit (36) zuerst schaltet, vorgenommen wird und eine, vorzugsweise synchrone und/oder gleichzeitige, Antriebsleistungserhöhung derjenigen Antriebseinheit (12), die mit dem Teilgetriebe (14A2), dessen Schalteinheit (36) zeitverzögert schaltet, vorgenommen wird; und/oder zwischen dem Schalten der Schalteinheiten (36) der Teilgetriebe (14A1, 14A2) eine Antriebsleistungsverringerung derjenigen Antriebseinheit (12), die mit dem Teilgetriebe (14A2), dessen Schalteinheit (36) zeitverzögert schaltet, vorgenommen wird und eine, vorzugsweise synchrone und/oder gleichzeitige, Antriebsleistungserhöhung derjenigen Antriebseinheit (12), die mit dem Teilgetriebe (14A1), dessen Schalteinheit (36) gerade geschaltet hat, vorgenommen wird; und/oder nach dem Schalten der Schalteinheiten (36) der Teilgetriebe (14A1, 14A2) eine Antriebsleistungsverringerung derjenigen Antriebseinheit (12), die mit dem Teilgetriebe (14A1), dessen Schalteinheit (36) zuerst geschaltet hat, vorgenommen wird und eine, vorzugsweise synchrone und/oder gleichzeitige, Antriebsleistungserhöhung derjenigen Antriebseinheit (12), die mit dem Teilgetriebe (14A2), dessen Schalteinheit (36) zeitverzögert geschaltet hat, vorgenommen wird.

14. Antriebsstrang (10) nach Anspruch 12 oder Anspruch 13:

  eine Antriebsleistungserhöhung während des Gangwechsels temporär maximal auf über eine Nennleistung der jeweiligen Antriebseinheit (12) gesteigert wird oder steigerbar ist; oder
  eine Antriebsleistungserhöhung während des Gangwechsels temporär maximal nur bis zu einer Nennleistung der jeweiligen Antriebseinheit (12) gesteigert wird oder steigerbar ist.

15. Kraftfahrzeug, vorzugsweise Nutzfahrzeug, aufweisend das Getriebe (14B) nach einem der Ansprüche 1 bis 11 oder den Antriebsstrang (10) nach einem der Ansprüche 12 bis 14.

FIG. 1

FIG. 2

FIG. 3

FIG. 4

FIG. 5

FIG. 6

| 12A | 12B | 12A | 12B | 12A | 12B |
|---|---|---|---|---|---|

14C 14C 14A 14A 14B 14B

| ≤12 t | 12 – 18 t | 18 – 26 t | 26 – 48 t | 48 – 60 t |
|---|---|---|---|---|

| 12 m | 18 m |
|---|---|

FIG. 7

58 56

# FIG. 8

# FIG. 9

FIG. 10

10

12        12

72
14
16

FIG. 11

72        14

30

FIG. 12

32    26    34
42
12              14A1
40              46        38
36                        50
28                        72
14D                       74
54    44                  30
28                        78
36                        76
54                        52
40                        50
12                        38
42
32    26    34            14A2

FIG. 13

FIG. 14

FIG. 15

FIG. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19932118 C1
- DE 102013204227 A1
- DE 102016002592 A